(19) Europäisches Patentamt / European Patent Office / Office européen des brevets

(11) **EP 2 497 239 B1**

(12) **FASCICULE DE BREVET EUROPEEN**

(45) Date de publication et mention
de la délivrance du brevet:
**17.12.2014 Bulletin 2014/51**

(21) Numéro de dépôt: **10773908.8**

(22) Date de dépôt: **03.11.2010**

(51) Int Cl.:
*H04L 25/02* (2006.01)   *H04L 27/02* (2006.01)
*H04B 7/08* (2006.01)   *H04L 1/06* (2006.01)
*H04L 25/03* (2006.01)

(86) Numéro de dépôt international:
**PCT/EP2010/066725**

(87) Numéro de publication internationale:
**WO 2011/054857 (12.05.2011 Gazette 2011/19)**

(54) **PROCEDE ET DISPOSITIF DE RECEPTION MONO ET MULTI-ANTENNES POUR LIAISONS DE TYPE ALAMOUTI**

VERFAHREN UND VORRICHTUNG ZUM EINZELN- UND MEHRFACH-ANTENNEN-EMPFANG VON ALAMOUTI-ARTIGEN VERBINDUNGEN

METHOD AND APPARATUS FOR SINGLE- AND MULTIPLE-ANTENNA RECEPTION OF ALAMOUTI-TYPE LINKS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.11.2009 FR 0905263**

(43) Date de publication de la demande:
**12.09.2012 Bulletin 2012/37**

(73) Titulaire: **Thales**
**92200 Neuilly Sur Seine (FR)**

(72) Inventeurs:
• **CHEVALIER, Pascal**
**F-92700 Colombes (FR)**
• **DUPUY, Florian**
**F-92700 Colombes (FR)**

(74) Mandataire: **Dudouit, Isabelle**
**Marks & Clerk France**
**Conseils en Propriété Industrielle**
**Immeuble " Visium "**
**22, avenue Aristide Briand**
**94117 Arcueil Cedex (FR)**

(56) Documents cités:
WO-A1-2007/094786   US-A1- 2003 227 410
US-A1- 2004 247 054   US-A1- 2004 260 522
US-A1- 2006 182 193

• **GERSTACKER W H ET AL: "EQUALIZATION CONCEPTS FOR ALAMOUTI'S SPACE-TIME BLOCK CODE", IEEE TRANSACTIONS ON COMMUNICATIONS, IEEE SERVICE CENTER, PISCATAWAY, NJ, US LNKD- DOI: 10.1109/TCOMM.2004.831357, vol. 52, no. 7, 1 juillet 2004 (2004-07-01), pages 1178-1190, XP001199180, ISSN: 0090-6778**
• **PSAROMILIGKOS I N: "Performance of blind channel estimation algorithms for space-frequency block coded multi-carrier code division multiple access systems", IET COMMUNICATIONS,, vol. 2, no. 2, 1 février 2008 (2008-02-01) , pages 320-328, XP006030705, ISSN: 1751-8636**
• **JAVIER VIA ET AL: "On the Blind Identifiability of Orthogonal Space-Time Block Codes From Second-Order Statistics", IEEE TRANSACTIONS ON INFORMATION THEORY, IEEE, US LNKD-DOI:10.1109/TIT.2007.913561, vol. 54, no. 2, 1 février 2008 (2008-02-01), pages 709-722, XP011200601, ISSN: 0018-9448**

EP 2 497 239 B1

## Description

L'objet de la présente demande de brevet concerne un procédé pour séparer plusieurs utilisateurs au sein d'une structure de communication comprenant une ou plusieurs antennes de réception, aussi bien en absence qu'en présence de brouillage externe au réseau. L'invention concerne aussi système permettant la mise en oeuvre du procédé.

Les systèmes multiple entrée- multiple sortie ou en abrégé anglo-saxon « MIMO » (Multiple Input - Multiple Output) offrent la possibilité de communications à haut débit pour des canaux à trajets multiples grâce aux techniques de multiplexage spatial et de codage spatio-temporel à l'émission, sans augmentation de la bande de transmission. En outre, les codes spatio-temporels (CST) permettent également d'accroître la portée et de fiabiliser les liaisons sans boucle de retour entre le récepteur et l'émetteur. Parmi les CST, les codes spatio-temporels orthogonaux (CSTO) sont d'un intérêt tout particulier. En effet, ils sont conçus pour générer une diversité spatiale maximale, pour un nombre donné d'antennes en émission et en réception, et permettent un décodage optimal (au sens du maximum de vraisemblance) très simple. Le CSTO le plus simple et le plus populaire a été découvert par Alamouti [1] et a été adopté dans de nombreux standards tels que l'UMTS (Universal Mobile Telcommunications Systems), le DSM, EDGE, la norme IEEE 802.11, ou encore la norme IEEE 802.16 [7]. Il utilise deux antennes à l'émission et est compatible d'une ou plusieurs antennes en réception.

D'autre part, comme le spectre est une ressource rare et chère, augmenter la capacité réseau sans recourir à une augmentation de bande constitue un challenge certain pour les réseaux cellulaires. Ceci motive donc le développement de techniques de réjection d'interférences permettant à plusieurs utilisateurs de partager les mêmes ressources spectrales sans impacter la qualité de transmission pour chaque utilisateur.

Techniques multi-antennes

Dans ce contexte, plusieurs techniques de réjection d'interférences [22], [23], permettant à $(P + 1)$ utilisateurs de partager le même canal à un instant donné, ont été développées cette dernière décennie, pour des utilisateurs équipés de $M$ antennes et utilisant un CSTO à l'émission. Dans un tel environnement, il a été montré que les symboles de chaque utilisateur peuvent être démodulés avec une diversité d'ordre $M$ si le récepteur est équipé de $N = MP + 1$ antennes. Toutefois, le nombre d'antennes en réception peut être réduit si la structure du CSTO est exploitée. En effet, dans ce cas, pour obtenir un gain de diversité d'ordre $M$ et pour rejeter P utilisateurs « Spatio-Temporels » ayant $M$ antennes d'émission chacun, le nombre minimal d'antennes de réception requis devient $N = P + 1$. Une telle structure de réjection d'interférences a été proposée dans [22], [23] pour un récepteur équipé de $N = 2$ antennes et pour $P + 1 = 2$ utilisateurs co-canal, chacun équipé de $M = 2$ antennes d'émission et utilisant le CSTO d'Alamouti [1]. Une généralisation de cette technique à $P + 1 > 2$ utilisateurs de type Alamouti avec $N > P$ antennes de réception a été proposée par l'art antérieur. Finalement, il est aussi connu de l'art antérieur d'utiliser une technique de réjection d'interférences permettant à un récepteur de $N > P$ antennes de séparer $P + 1$ signaux transmis, chacun équipés de $M > 2$ antennes à l'émission et utilisant un CST quasi-orthogonal tout en assurant pour chaque utilisateur sa réception avec une diversité d'ordre $M(N - P)$.

Ainsi les récepteurs robustes aux interférences actuellement disponibles compatibles d'une transmission avec un CSTO requièrent plusieurs antennes en réception quelque soit la constellation utilisée. En outre, les récepteurs disponibles n'utilisent qu'une partie de l'information contenue dans les statistiques d'ordre deux des observations. Pour cette raison, ils deviennent sous-optimaux lorsque la partie des statistiques d'ordre deux des observations non exploitée contient de l'information. C'est en particulier le cas en présence d'interférences intra-réseau (c'est-à-dire générées par le réseau lui-même) lorsque les constellations utilisées par les utilisateurs sont non circulaires comme les constellations ASK (Amplitude Shift Keying), BPSK (Binary Phase Shift Keying) ou QAM (Quadrature Amplitude Modulation) rectangulaires. C'est aussi le cas, pour tous types de constellations, en présence d'interférences externes au réseau, soit non circulaires, soit à bande très étroite.

## Techniques mono-antenne

D'autre part, les récepteurs mono-antenne robustes aux interférences disponibles actuellement sont relatifs à des liaisons entrée unique- sortie unique ou en abréviation anglo-saxonne « SISO » (Single Input - Single Output) mono-porteuse. Parmi ces techniques, ceux qui exploitent la noncircularité (ou impropriété) des constellations rectilignes (à valeurs réelles), telles que les modulations ASK (amplitude shift keying), BPSK (Binary Phase Shift Keying), ou des constellations correspondant à un filtrage complexe des constellations rectilignes telles que les modulations MSK (Minimum Shift Keying), GMSK (Gaussian MSK) ou OQAM (Offset Quadrature Modulation) ont reçu une attention toute particulière par les spécialistes de ce domaine technique. Ces techniques implantent un filtre linéaire connu sous la désignation anglo-saxonne « Widely Linear » optimal des observations et permettent la séparation de deux utilisateurs à partir d'une seule antenne par exploitation d'une discrimination de phase entre les utilisateurs, d'où le concept SAIC (Single Antenna Interference Cancellation). Le potentiel de ce concept conjointement à sa faible complexité sont les raisons pour lesquelles le 3G Americas a présenté la technologie SAIC comme une amélioration très forte des récepteurs GSM (Global System Mobile) de type portatifs, permettant du même coup une augmentation substancielle de la capacité système du réseau GSM. Cette technologie a été normalisée en 2005 pour le GSM et est désormais opérationnelle dans de nombreux téléphones portables depuis 2006. Une nouvelle normalisation de ce concept, appelé MUROS (Multi-User Reusing One Slot), est actuellement en cours d'investigation dans le but de permettre à plusieurs utilisateurs GSM de réutiliser le même créneau ou slot TDMA (Time Division Multiple Access) . L'extension du concept SAIC à une réception multi-antennes est appelée MAIC (Multiple Antenna Interférence Cancellation) et est d'un grand intérêt pour les réseaux GPRS (General Packet Radio Service) en particulier.

Dans la mesure où l'installation de plusieurs antennes sur un téléphone portable reste un challenge technologique pour les téléphones portables de 4ème generation, à cause des problèmes d'encombrement et de coût, la technologie SAIC reste d'un grand intérêt pour les portables de 4$^{eme}$ génération, utilisant une forme d'onde OFDM (Orthogonal Frequency Division Multiplex) de type Wimax ou LTE. Pour cette raison, une extension de cette technologie aux formes d'onde OFDM utilisant la modulation ASK et une seule antenne d'émission, à partir d'un récepteur mono-antenne, a été présentée dans l'art antérieur En dépit du fait que la modulation ASK est moins efficace, énergétiquement, qu'une modulation QAM à nombre d'états similaires, des degrés de liberté supplémentaires sont disponibles et peuvent être exploités pour faire de la réjection d'interférences en réception. En outre, il est aussi connu pour les réseaux DS-CDMA et pour les systèmes MIMO utilisant la technologie V-BLAST qu'une transmission avec des symboles réels et un récepteur « Widely Linear » peut engendrer une efficacité spectrale supérieure qu'en utilisant une constellation complexe à partir d'un récepteur linéaire. En conséquence, l'utilisation d'une constellation ASK couplée à un récepteur « Widely Linear » au lieu d'une constellation complexe avec un récepteur linéaire, ne semble pas être une limitation et peut même apporter des avantages en termes de taux d'erreurs binaires et d'efficacité spectrale.

Dans le contexte des systèmes MIMO, les récepteurs "Widely Linear" ont été utilisés récemment, implicitement ou explicitement, pour améliorer la réception d'un utilisateur utilisant la technologie V-BLAST de multiplexage spatial. Toutefois, en dépit de ces travaux, l'extension des technologies SAIC/MAIC à des transmissions avec CSTO, tel que le CSTO d'Alamouti, n'a pas été proposée.

Le document XP001199180 intitulé « Equalization concepts for Alamouti's space-time block code », publié le 7 juillet 2004 décrit un procédé permettant d'améliorer l'égalisation de canal des schémas de codage d'Alamouti pour des formes d'onde mono-porteuses pas filtrage « Widely linear » des observations. Dans ce document, les formes d'onde prises en compte sont mono-porteuses et le problème de la prise en compte d'interférences éventuelles n'est pas posé. L'objet de cette invention est, notamment, de proposer une nouvelle structure de réception à $N \geq 1$ antennes, robuste aux interférences aussi bien intra-réseau qu'externes, pour des utilisateurs exploitant deux antennes en émission conjointement au code CSTO d'Alamouti. Cette nouvelle structure exploite toutes les informations contenues dans les statistiques d'ordre deux des observations. Elle offre donc de meilleures performances que les structures actuellement disponibles pour les contextes où celles-ci s'avèrent sous-optimales. C'est en particulier le cas en présence d'interférences intra-réseau pour des constellations non circulaires ou en présence d'interférences externes non circulaires ou à bande très étroite pour tous types de constellations. Dans le cas particulier de constellations rectilignes (ASK, BPSK), le récepteur proposé permet la séparation de 2N utilisateurs Alamouti à partir de N antennes, d'où la capacité à séparer deux utilisateurs, c'est-à-dire à rejeter une interférence intra-réseau, à partir d'1 antenne. Ce résultat étend du même coup la technologie SAIC, disponible pour des systèmes SISO à constellations rectilignes ou quasi-rectilignes (MSK, GMSK, OQAM), et opérationnelle pour le GSM, aux systèmes MISO de type Alamouti. Cette technologie, alternative très simple à la démodulation multi-utilisateurs très couteuse [42], permet de s'affranchir du challenge technologique que constitue toujours pour les radiocommunications cellulaires de 4$^{ème}$ génération, l'utilisation de plusieurs antennes sur les portatifs à cause des problèmes d'encombrement et de côuts. L'extension de ce concept à une réception multi-antennes, appelée MAIC, permet de traiter de manière très performante les interférences aussi bien internes qu'externes au réseau.

L'objet de la présente invention concerne un procédé pour séparer plusieurs utilisateurs dans un système de communication comprenant 2 antennes à l'émission et une à N antennes en réception, lesdits signaux émis par lesdits utilisateurs contenant des symboles $a_n$, x() correspondant au vecteur des enveloppes des signaux en sortie des 1 à N antennes de réception après une opération de filtrage de mise en forme, ledit système étant robuste aux interférences aussi bien intra-réseau qu'externes, caractérisé en ce qu'il utilise un filtre linéaire, en moyenne quadratique, étendu sur un vecteur d'observation étendu $x = [x(2n-1)^T \mathbf{x}(2n)^T \mathbf{x}(2n-1)^H \mathbf{x}(2_n)^H]^T$ où $\mathbf{x}(2n-1)$ et $\mathbf{x}(2n)$ correspondent aux observations ($N \times 1$ ($N \geq 1$) aux instants symboles 2n-1 et 2n, un vecteur d'observation étant associé à une sous-porteuse donnée sur deux symboles.

L'invention concerne aussi un système pour séparer plusieurs utilisateurs dans un système de communication comprenant 2 antennes à l'émission et une à N antennes en réception, ledit système étant robuste aux interférences aussi bien intra-réseau qu'externes, lesdits signaux émis par lesdits utilisateurs contenant des symboles $a_n$, x() correspondant au vecteur des enveloppes des signaux en sortie des 1 à N antennes de réception après une opération de filtrage de mise en forme caractérisé en ce qu'il comporte un processeur adapté à mettre en oeuvre les étapes du procédé décrit précédemment et dans la description qui va suivre. Le procédé et le système selon l'invention sont notamment utilisés pour traiter conjointement, à partir d'un réseau de $N \geq 1$ capteurs, $P_{int}$ interférences internes et $P_{ext}$ interférences externes au réseau composées de $P_{rc}$ interférences rectilignes et cohérentes, $P_{rnc}$ interférences rectilignes et non cohérentes, $P_{nrc}$ interférences nonrectilignes et cohérentes et $P_{nmc}$ interférences nonrectilignes et noncohérentes telles que $P_{ext} = P_{rc} + P_{rnc} + P_{nrc} + P_{nmc}$ et vérifiant les conditions suivantes :
Pour des constellations rectilignes :

$$2P_{int} + P_{rc} + 2P_{rnc} + 2P_{nrc} + 4P_{nrnc} \leq 4N - 2$$

Pour des constellations non rectilignes :

$$4P_{int} + P_{rc} + 2P_{rnc} + 2P_{nrc} + 4P_{nrnc} \leq 4N - 4$$

D'autres caractéristiques et avantages de la présente invention apparaîtront mieux à la lecture de la description d'un exemple donné à titre illustratif et nullement limitatif annexé des figures qui représentent :

- La figure 1 le principe de base du schéma de codage d'Alamouti
- La figure 2 un exemple de récepteur selon l'invention permettant de mettre en oeuvre les étapes du procédé selon l'invention,
- La figure 3 une synthèse des paramètres de la simulation illustrative
- La figure 4 une illustration des performances du récepteur proposé et de certains récepteurs de l'état de l'art antérieur en présence d'une interférence interne.

Afin de mieux faire comprendre l'objet de la présente invention, la description qui suit va être donnée dans le cas d'un système de réception de type Alamouti et va expliciter différentes hypothèses prises en compte, ainsi que la description d'une structure de récepteur de type Alamouti selon l'art antérieur.

**HYPOTHESES, STATISTIQUES ET FILTRAGE WIDELY LINEAR**

**A. Hypothèses**

A1. *Modèle d'Observations*

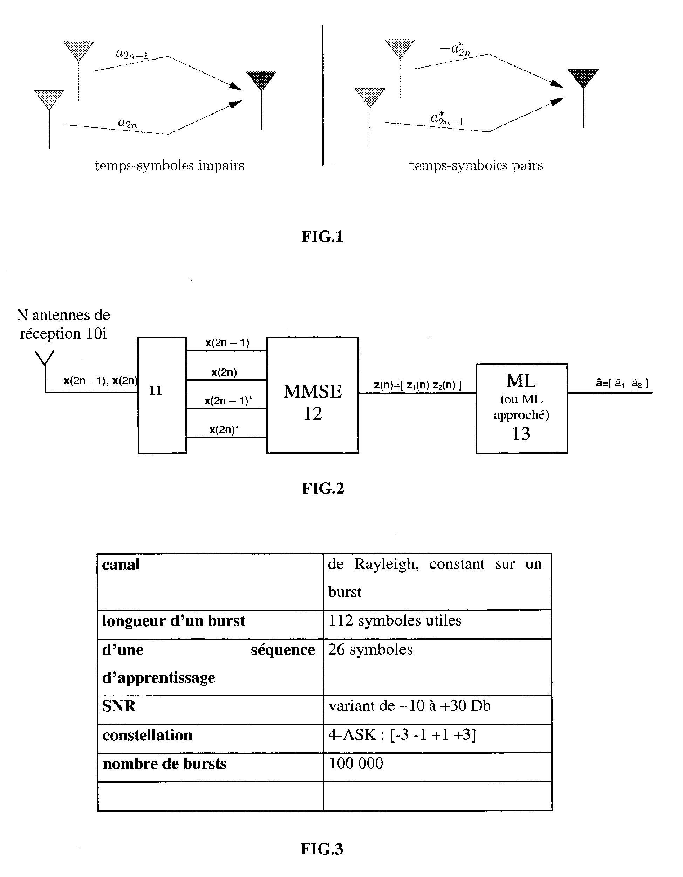

On considère un système de radiocommunications qui utilise le schéma d'Alamouti avec $M = 2$ antennes à l'émission [1] et N antennes en réception, comme décrit par la Figure 1. Les enveloppes complexes, $s_1(t)$ et $s_2(t)$, des signaux transmis par les antennes 1 et 2 respectivement sont données par

$$s_1(t) = \mu \sum_n a_{2n-1} v(t - (2n-1)T) - a_{2n}{}^* v(t - 2nT)$$

$$(1)$$

$$s_2(t) = \mu \sum_n a_{2n} v(t - (2n-1)T) + a_{2n-1}{}^* v(t - 2nT)$$

$$(2)$$

où $^*$ signifie complexe conjugué, les quantités $a_n$ sont des variables aléatoires complexes indépendantes et identiquement distribuées (i.i.d) correspondant aux symboles transmis, $T$ est la durée symbole, $v(t)$ est un filtre de mise en forme en cosinus surélevé (filtre de 1/2 Nyquist) et $\mu$ est une valeur réelle qui contrôle la puissance instantanée de $s_1(t)$ et $s_2(t)$.

On suppose que les signaux transmis $s_1(t)$ et $s_2(t)$ sont à bande étroite (BE) pour les réseaux d'émission et de reception et que le canal de propagation est constant sur au moins la durée de deux périodes symboles (et typiquement un burst) et genère soit du fading plat soit une propagation idéale, en fonction de l'environnement de diffuseurs. On note par $x_v(t)$, le vecteur des envelopes complexes des signaux en sortie des $N$ antennes de réception après une opération de filtrage adapté au filtre de mise en forme $v(t)$. Dans ces conditions, en supposant une synchronisation temporelle et fréquentielle idéale, les vecteurs échantillons $x_v((2n - 1)T)$ et $x_v(2nT)$ peuvent s'écrire

$$x_v((2n - 1)T) \triangleq x_1(n) = \mu_1 \, a_{2n-1} \, h_1 + \mu_2 \, a_{2n} \, h_2 + b_1(n) \tag{3}$$

$$x_v(2nT) \triangleq x_2(n) = -\mu_1 \, a_{2n}^* \, h_1 + \mu_2 \, a_{2n-1}^* \, h_2 + b_2(n) \tag{4}$$

où $\mu_i$ ($i$ = 1, 2) est un scalaire réel proportionnel à $\mu$ contrôlant la puissance du signal transmis $s_i(t)$ reçu par le réseau d'antennes; $h_i$ ($i$ = 1, 2), tel que $E[h_i^H \, h_i] = N$, est le vecteur canal de propagation normalisé entre l'antenne d'émission i et le réseau d'antennes en réception; $b_1(n)$ et $b_2(n)$ sont les vecteurs bruit échantillonnés respectivement aux instants $(2n - 1)T$ et $2nT$, potentiellement composés d'interférences internes au réseau de communications, d'interférences externes (non générées par le réseau lui-même) et du bruit de fond. Notons que pour des canaux sélectifs en fréquence, les modèles (3), (4) peuvent aussi décrire, après l'opération de Transformée de Fourier Discrète, les vecteurs observation associés à une sous-porteuse donnée, sur deux symboles OFDM consécutifs, d'une transmission OFDM MIMO utilisant le schéma d'Alamouti.

La figure 1 représente le codage selon les équations (3) et (4) en utilisant le schéma d'Alamouti.

Définissant les vecteurs $(2N \times 1)$, $x(n)$, $b(n)$, $f_1$, $f_2$, $f_3$ et $f_4$ par $x(n) \triangleq [x_1(n)^T, x_2(n)^T]^T$, $b(n) \triangleq [b_1(n)^T, b_2(n)^T]^T$, $f_1 \triangleq [\mu_1 \, h_1^T, 0^T]^T$, $f_2 \triangleq [\mu_2 \, h_2^T, 0^T]^T$, $f_3 \triangleq [0^T, \mu_2 \, h_2^T]^T$ et $f_4 \triangleq [0^T, -\mu_1 \, h_1^T]^T$ et définissant les vecteurs $a(n)$ (2 x 1), $a(n)$ (4 x 1) et la matrice $F$ $(2N \times 4)$ par respectivement $a(n) \triangleq [a_{2n-1}, a_{2n}]^T$, $\tilde{a}(n) \triangleq [a(n)^T, a(n)^H]^T$ et $F \triangleq [f_1, f_2, f_3, f_4]$, les équations (3) et (4) peuvent s'écrire sous une forme plus compacte donnée par

$$x(n) = a_{2n-1} f_1 + a_{2n} f_2 + a_{2n-1}^* f_3 + a_{2n}^* f_4 + b(n) \triangleq F \tilde{a}(n) + b(n) \tag{5}$$

A2. *Modèle d'observations alternatif*

La plupart des récepteurs Alamouti disponibles actuellement pour la réjection d'interférences intra-réseaux, exploitent l'information contenue dans le vecteur observation $(2N \times 1)$ $\bar{x}(n) \triangleq [x_1(n)^T, x_2(n)^H]^T$, où $H$ signifie transposé et conjugué.

En définissant les vecteurs $(2N \times 1)$ $\bar{b}(n)$, $g_1$ et $g_2$ par $\bar{b}(n) \triangleq [b_1(n)^T, b_2(n)^H]^T$, $g_1 \triangleq [\mu_1 \, h_1^T, \mu_2 \, h_2^H]^T$ et $g_2 \triangleq [\mu_2 \, h_2^T, -\mu_1 \, h_1^H]^T$, en définissant la matrice G $(2N \times 2)$ par $G \triangleq [g_1, g_2]$ et en utilisant (2) et (3), le vecteur observations $\bar{x}(n)$ peut s'écrire

$$\bar{x}(n) = a_{2n-1} g_1 + a_{2n} g_2 + \bar{b}(n) \triangleq G \, a(n) + \bar{b}(n) \tag{6}$$

A3. *Modèle d'observation étendu utilisé par le procédé selon l'invention*

Pour introduire le filtrage dit « widely linear » de $x(n)$ dans la suite, on définit les vecteurs étendus $\tilde{f}_1, \tilde{f}_2, \tilde{f}_3, \tilde{f}_4$, $\tilde{b}(n)$ et $\tilde{x}(n)$ par les vecteurs $(4N \times 1)$ respectivement $\tilde{f}_1 \triangleq [f_1^T, f_3^H]^T$, $f_2 \triangleq [f_2^T, f_4^H]^T$, $\tilde{f}_3 \triangleq [f_3^T, f_1^H]^T$, $f_4 \triangleq [f_4^T, f_2^H]^T$, $b(n) \triangleq [b(n)^T, b(n)^H]^T$ et $x(n) \triangleq [x(n)^T, x(n)^H]^T$. En définissant la matrice F $(4N \times 4)$ par $F \triangleq [\tilde{f}_1, \tilde{f}_2, \tilde{f}_3, \tilde{f}_4]$ et utilisant (5), le vecteur

$\tilde{x}(n)$ s'écrit

$$\tilde{x}(n) = a_{2n-1}\tilde{f}_1 + a_{2n}\tilde{f}_2 + a_{2n-1}{}^*\tilde{f}_3 + a_{2n}{}^*\tilde{f}_4 + \tilde{b}(n) \triangleq \tilde{F}\,\tilde{a}(n) + \tilde{b}(n) \quad (7)$$

*A4. Interprétation en termes de traitement d'antenne*

Les modèles (5), (6) et (7) peuvent être interprétés d'un point de vue du traitement d'antenne, très éclairant pour la suite. Le modèle (5) décrit la réception équivalente à l'instant $nT$ par un réseau virtuel de $N_e = 2N$ antennes de $P_e = 2$ sources à BE non corrélées ($a_{2n-1}$ and $a_{2n}$) pour des constellation rectilignes (à valeurs réelles) et de $P_e = 4$ sources à BE non parfaitement corrélées ($a_{2n-1}$, $a_{2n}$, $a_{2n-1}{}^*$, $a_{2n}{}^*$) pour des constellations non rectilignes associées aux vecteurs canaux virtuels respectivement $f_1 + f_3$ et $f_2 + f_4$ pour des constellation rectilignes et $f_1, f_2, f_3$ et $f_4$ pour des constellations non rectilignes. De même le modèle (6) décrit la réception équivalente à l'instant $nT$ par un réseau virtuel de $Ne = 2N$ antennes de $P_e = 2$ sources à BE non corrélées ($a_{2n-1}$ and $a_{2n}$) pour toutes les constellations, associées aux vecteurs canaux virtuels respectivement $g_1$ et $g_2$. Enfin, Le modèle (7) décrit la réception équivalente à l'instant $nT$ par un réseau virtuel de $Ne = 4N$ antennes de $P_e = 2$ sources à BE non corrélées ($a_{2n-1}$ and $a_{2n}$) pour des constellations rectilignes (à valeurs réelles) et de $P_e = 4$ sources à BE non parfaitement corrélées ($a_{2n-1}$, $a_{2n}$, $a_{2n-1}{}^*$, $a_{2n}{}^*$) pour des constellations non rectilignes associées aux vecteurs canaux virtuels respectivement $\tilde{f}_1 + \tilde{f}_3$ et $\tilde{f}_2 + \tilde{f}_4$ pour des constellations rectilignes et $\tilde{f}_1, \tilde{f}_2, \tilde{f}_3$ et $\tilde{f}_4$ pour des constellations non rectilignes.

**B. Statistiques d'ordre 2**

*B1. Statistiques des observations*

Les statistiques du second ordre des observations correspondent aux six matrices $R_{x1}(n)$, $R_{x2}(n)$, $R_{x12}(n)$, $C_{x1}(n)$, $C_{x2}(n)$, $C_{x12}(n)$ definies, à partir de (3) et (4), par

$$R_{x1}(n) \triangleq E[x_1(n)\,x_1(n)^{\mathrm{H}}] = \pi_1\,h_1h_1{}^{\mathrm{H}} + \pi_2\,h_2h_2{}^{\mathrm{H}} + R_1(n) \triangleq R_{s1} + R_1(n) \quad (8)$$

$$R_{x2}(n) \triangleq E[x_2(n)\,x_2(n)^{\mathrm{H}}] = \pi_1\,h_1h_1{}^{\mathrm{H}} + \pi_2\,h_2h_2{}^{\mathrm{H}} + R_2(n) \triangleq R_{s2} + R_2(n) \quad (9)$$

$$R_{x12}(n) \triangleq E[x_1(n)\,x_2(n)^{\mathrm{H}}] = \sqrt{\pi_1}\,\sqrt{\pi_2}\,\gamma_a[h_1h_2{}^{\mathrm{H}} - h_2\,h_1{}^{\mathrm{H}}] + R_{12}(n) \triangleq R_{s12} + R_{12}(n)$$

$$(10)$$

$$C_{x1}(n) \triangleq E[x_1(n)\,x_1(n)^{\mathrm{T}}] = \pi_1\,\gamma_a\,h_1h_1{}^{\mathrm{T}} + \pi_2\,\gamma_a\,h_2h_2{}^{\mathrm{T}} + C_1(n) \triangleq C_{s1} + C_1(n)$$

$$(11)$$

$$C_{x2}(n) \triangleq E[x_2(n)\,x_2(n)^{\mathrm{T}}] = \pi_1\,\gamma_a{}^*\,h_1h_1{}^{\mathrm{T}} + \pi_2\,\gamma_a{}^*\,h_2h_2{}^{\mathrm{T}} + C_2(n) \triangleq C_{s2} + C_2(n)$$

$$(12)$$

$$C_{x12}(n) \triangleq \mathrm{E}[\boldsymbol{x}_1(n)\,\boldsymbol{x}_2(n)^{\mathrm{T}}] = \sqrt{\pi_1}\,\sqrt{\pi_2}\,[\boldsymbol{h}_1\boldsymbol{h}_2^{\mathrm{T}} - \boldsymbol{h}_2\,\boldsymbol{h}_1^{\mathrm{T}}] + C_{12}(n) \triangleq C_{s12} + C_{12}(n) \tag{13}$$

où $\pi_1 \triangleq \mu_1{}^2\pi_a$ et $\pi_2 \triangleq \mu_2{}^2\pi_a$ sont les puissances moyennes des signaux respectivement 1 et 2 transmis par antenne de réception, avec $\pi_a \triangleq \mathrm{E}[|a_n|^2]$; $\gamma_a = \mathrm{E}[a_{2n-1}{}^2]\,/\,\pi_a$ ; $R_1(n) \triangleq \mathrm{E}[\boldsymbol{b}_1(n)\,\boldsymbol{b}_1(n)^{\mathrm{H}}]$, $R_2(n) \triangleq \mathrm{E}[\boldsymbol{b}_2(n)\,\boldsymbol{b}_2(n)^{\mathrm{H}}]$, $R_{12}(n) \triangleq \mathrm{E}[\boldsymbol{b}_1(n)\,\boldsymbol{b}_2(n)^{\mathrm{H}}]$, $C_1(n) \triangleq \mathrm{E}[\boldsymbol{b}_1(n)\,\boldsymbol{b}_1(n)^{\mathrm{T}}]$, $C_2(n) \triangleq \mathrm{E}[\boldsymbol{b}_2(n)\,\boldsymbol{b}_2(n)^{\mathrm{T}}]$, $C_{12}(n) \triangleq \mathrm{E}[\boldsymbol{b}_1(n)\,\mathrm{b}_2(n)^{\mathrm{T}}]$ et où $R_{s1}$, $R_{s2}$, $R_{s12}$, $C_{s1}$, $C_{s2}$ et $C_{s12}$ sont les six matrices de statistiques du second ordre du signal utile reçu. En utilisant (5), les statistiques du second ordre des observations peuvent s'écrire sous une forme plus compacte à travers les matrices $R_x(n)$ et $C_x(n)$, définies par :

$$R_x(n) \triangleq \mathrm{E}[\boldsymbol{x}(n)\,\boldsymbol{x}(n)^{\mathrm{H}}] = \begin{pmatrix} R_{x1}(n) & R_{x12}(n) \\ R_{x12}(n)^{\mathrm{H}} & R_{x2}(n) \end{pmatrix} = F\,R_{\tilde{a}}\,F^{\mathrm{H}} + R_b(n) \triangleq R_s + R_b(n) \tag{14}$$

$$C_x(n) \triangleq \mathrm{E}[\boldsymbol{x}(n)\,\boldsymbol{x}(n)^{\mathrm{T}}] = \begin{pmatrix} C_{x1}(n) & C_{x12}(n) \\ C_{x12}(n)^{\mathrm{T}} & C_{x2}(n) \end{pmatrix} = F\,C_{\tilde{a}}\,F^{\mathrm{T}} + C_b(n) \triangleq C_s + C_b(n) \tag{15}$$

où $R_b(n) \triangleq \mathrm{E}[\boldsymbol{b}(n)\,\boldsymbol{b}(n)^{\mathrm{H}}]$, $C_b(n) \triangleq \mathrm{E}[b(n)\,b(n)^{\mathrm{T}}]$, $R_{\tilde{a}} = \mathrm{E}[\tilde{\boldsymbol{a}}(n)\tilde{a}(n)^{\mathrm{H}}]$, $C_{\tilde{a}} = \mathrm{E}[\tilde{\boldsymbol{a}}(n)\,\tilde{\boldsymbol{a}}(n)^{\mathrm{T}}]$ et où $R_s$ et $C_s$ correspondent aux matrices respectivement $R_x(n)$ et $C_x(n)$ en absence de bruit total.

B2. *Statistiques des observations alternatives et étendues*

Les statistiques du second ordre des vecteurs $\overline{\boldsymbol{x}}(n)$ (utilisé par les procédés selon l'art antérieur) et $\boldsymbol{x}(n)$ (utilisé pour le procédé selon l'invention) qui sont utilisées dans la suite correspondent aux matrices $R_{\overline{x}}(n)$ et $R_{\tilde{x}}(n)$ définies respectivement par

Art antérieur :

$$R_{\overline{x}}(n) \triangleq \mathrm{E}[\overline{\boldsymbol{x}}(n)\,\overline{\boldsymbol{x}}(n)^{\mathrm{H}}] = \begin{pmatrix} R_{x1}(n) & C_{x12}(n) \\ C_{x12}(n)^{\mathrm{H}} & R_{x2}(n)^{*} \end{pmatrix} = \pi_a\,GG^{\mathrm{H}} + R_{\overline{b}}(n) \triangleq R_{\overline{s}} + R_{\overline{b}}(n) \tag{16}$$

Procédé selon l'invention :

$$R_{\tilde{x}}(n) \triangleq \mathrm{E}[\tilde{\boldsymbol{x}}(n)\,\tilde{\boldsymbol{x}}(n)^{\mathrm{H}}] = \begin{pmatrix} R_X(n) & C_X(n) \\ C_X(n)^* & R_X(n)^* \end{pmatrix} = \tilde{F}\,R_{\tilde{a}}\,\tilde{F}^{\mathrm{H}} + R_{\tilde{b}}(n) \triangleq R_{\tilde{s}} + R_{\tilde{b}}(n)$$

$$(17)$$

où $R_{\tilde{s}}$ et $R_{\bar{s}}$ correspondent aux matrices respectivement $R_{\tilde{x}}(n)$ et $R_{\bar{x}}(n)$ en absence de bruit total et où $R_{\bar{b}}(n) \triangleq \mathrm{E}[\bar{\boldsymbol{b}}(n)\,\bar{\boldsymbol{b}}(n)^{\mathrm{H}}]$ et $R_b(n) \triangleq \mathrm{E}[\tilde{\boldsymbol{b}}(n)\,\tilde{\boldsymbol{b}}(n)^{\mathrm{H}}]$.

C. Filtrage Linéaire et Widely Linéaire

Les filtrages invariants dans le temps (IT) et linéaires de $\boldsymbol{x}(n)$ (art antérieur), $\bar{x}(n)$ (art antérieur) et $\tilde{x}(n)$ (utilisé pour la mise en oeuvre du procédé selon l'invention) sont respectivement définis par les relations d'entrée-sortie suivantes

$$y(n) = \boldsymbol{w}^{\mathrm{H}}\boldsymbol{x}(n) = \boldsymbol{w}_{11}^{\mathrm{H}}\boldsymbol{x}_1(n) + \boldsymbol{w}_{12}^{\mathrm{H}}\boldsymbol{x}_2(n) \qquad (18)$$

$$y(n) = \bar{\boldsymbol{w}}^{\mathrm{H}}\bar{\boldsymbol{x}}(n) = \boldsymbol{w}_{11}^{\mathrm{H}}\boldsymbol{x}_1(n) + \boldsymbol{w}_{22}^{\mathrm{H}}\boldsymbol{x}_2(n)^* \qquad (19)$$

$$y(n) = \tilde{\boldsymbol{w}}^{\mathrm{H}}\tilde{\boldsymbol{x}}(n) = \boldsymbol{w}_1^{\mathrm{H}}\boldsymbol{x}(n) + \boldsymbol{w}_2^{\mathrm{H}}\boldsymbol{x}(n)^*$$

$$= \boldsymbol{w}_{11}^{\mathrm{H}}\boldsymbol{x}_1(n) + \boldsymbol{w}_{21}^{\mathrm{H}}\boldsymbol{x}_1(n)^* + \boldsymbol{w}_{12}^{\mathrm{H}}\boldsymbol{x}_2(n) + \boldsymbol{w}_{22}^{\mathrm{H}}\boldsymbol{x}_2(n)^* \qquad (20)$$

où $w_{11}$, $w_{12}$, $w_{21}$ et $w_{22}$ sont des vecteurs complexes ($N$ x 1) tels que $\boldsymbol{w} = \boldsymbol{w}_1 \triangleq [w_{11}\mathrm{T}, w_{12}^{\mathrm{T}}]^{\mathrm{T}}$, $\bar{w} \triangleq [w_{11}^{\mathrm{T}}, w_{22}^{\mathrm{T}}]^{\mathrm{T}}$, $w_2 \triangleq [w_{21}^{\mathrm{T}}, w_{22}^{\mathrm{T}}]^{\mathrm{T}}$ et $\tilde{w} \triangleq [w_1^{\mathrm{T}}, w_2^{\mathrm{T}}]^{\mathrm{T}}$. Les expressions (18), (19) et (20) décrivent un filtrage respectivement linéaire, partiellement widely linéaire et pleinement widely linéaire de $\boldsymbol{x}(n)$.

**RECEPTEURS MIMO ALAMOUTI OPTIMAUX**

**A. Recepteur optimal au sens du maximum de vraisemblance (une variante de mise en oeuvre de l'invention)**

En supposant un vecteur bruit $\boldsymbol{b}(n)$ Gaussien et noncirculaire, en dépit du fait que les interférences intra-réseau ne sont pas Gaussiennes, la densité de propabilité de $\boldsymbol{b}(n)$ s'écrit

$$\mathrm{p}[\tilde{\boldsymbol{b}}(n)] \triangleq \pi^{-2N}\det[R_{\tilde{b}}(n)]^{-1/2}\exp[-(1/2)\tilde{\boldsymbol{b}}(n)^{\mathrm{H}}R_{\tilde{b}}(n)^{-1}\tilde{\boldsymbol{b}}(n)] \qquad (21)$$

Sous ces hypothèses, on déduit de (7) que le récepteur optimal au sens du maximum de vraisemblance pour la demodulation du vecteur $\boldsymbol{a}(n)$ en bruit noncirculaire au second ordre est tel que $\boldsymbol{a}(n)$ maximise le critère défini par

$$C_{nc\text{-}ml}[\boldsymbol{a}(n)] \triangleq \mathrm{p}[\tilde{\boldsymbol{b}}(n) = \tilde{\boldsymbol{x}}(n) - \tilde{F}\,\tilde{\boldsymbol{a}}(n)/\boldsymbol{a}(n)] \qquad (22)$$

Utilisant (21) dans (22), on déduit que maximiser (22) équivaut à minimiser $C_{ncwls}[\boldsymbol{a}(n)]$ défini par :

$$C_{nc\text{-}wls}[\boldsymbol{a}(n)] \triangleq [\tilde{\boldsymbol{x}}(n) - \tilde{F}\,\tilde{\boldsymbol{a}}(n)]^{H} R_{\tilde{b}}(n)^{-1}[\tilde{\boldsymbol{x}}(n) - \tilde{F}\,\tilde{\boldsymbol{a}}(n)] \qquad (23)$$

Le recepteur qui génère le vecteur $\boldsymbol{a}(n)$ minimisant (23) est appelé récepteur NC-ML (récepteur ML en bruit total noncirculaire). Sa mise en oeuvre requiert la connaissance de $R_{\tilde{b}}(n)$, c'est-à-dire une référence bruit total seul (RBS), et de $\mu_1\,\boldsymbol{h}_1$ et $\mu_2\,\boldsymbol{h}_2$. Ce récepteur exploite de manière optimale toutes les informations contenues dans $R_{\tilde{b}}(n)$, c'est-à-dire dans $R_1(n)$, $R_2(n)$, $R_{12}(n)$, $C_1(n)$, $C_2(n)$ et $C_{12}(n)$. C'est un récepteur couplé dans le cas general, ce qui signifie qu'il requiert l'estimation conjointe de $a_{2n-1}$ et $a_{2n}$. Celle-ci génère $M^2$ tests pour le vecteur $\boldsymbol{a}(n)$, où $M$ est le nombre d'états de la constellation. Ce récepteur optimal de type Alamouti, calculé à partir du vecteur étendu $\tilde{\boldsymbol{x}}(n)$, est nouveau.

**B. Recepteur conventionnel d'Alamouti selon l'art antérieur**

Le récepteur conventionnel d'Alamouti [1] (CONV) correspond au récepteur optimal précédent pour un bruit total circulaire et blanc temporellement et spatialement, c'est-à-dire pour $R_b(n) = \eta_2 I$ et $C_b(n) = 0$, où $\eta_2$ est la puissance moyenne du bruit par antenne de réception. Sous ces hypotheses, minimiser (23) équivaut à minimiser (24) et (25) définis par

$$C_{conv,1}[a_{2n-1}] \triangleq |a_{2n-1}|^2 \,[\mu_1{}^2\,\boldsymbol{h}_1{}^{H}\boldsymbol{h}_1 + \mu_2{}^2\boldsymbol{h}_2{}^{H}\boldsymbol{h}_2] - 2\mathrm{Re}[a_{2n-1}{}^{*}(\mu_1\,\boldsymbol{h}_1{}^{H}\boldsymbol{x}_1(n)$$

$$+\ \mu_2\,\boldsymbol{h}_2{}^{T}\boldsymbol{x}_2(n)\,{}^{*})] \qquad (24)$$

$$C_{conv,2}[a_{2n}] \triangleq |a_{2n}|^2 \,[\mu_1{}^2\,\boldsymbol{h}_1{}^{H}\boldsymbol{h}_1 + \mu_2{}^2\boldsymbol{h}_2{}^{H}\boldsymbol{h}_2] - 2\mathrm{Re}[a_{2n}{}^{*}(\mu_2\,\boldsymbol{h}_2{}^{H}\boldsymbol{x}_1(n) -$$

$$\mu_1\,\boldsymbol{h}_1{}^{T}\boldsymbol{x}_2(n)\,{}^{*})] \qquad (25)$$

La mise en oeuvre de ce récepteur ne requiert que la connaissance de $\mu_1\boldsymbol{h}_1$ et $\mu_2\boldsymbol{h}_2$. Ce récepteur n'est pas robuste à la présence d'interférences.

**RECEPTEURS MIMO ALAMOUTI MMSE**

Une alternative au récepteur optimal (23) correspond à la famille des récepteurs MMSE (Minimum Mean Square Error). Ces récepteurs sont beaucoup moins complexes que le récepteur optimal car decouplés et leur mise en oeuvre ne requiert pas la connaissance d'une référence bruit total seul, ce qui en fait leur grand intérêt en pratique. Pour cette raison, un récepteur MMSE à structure *partiellement widely linear* à été proposé dans la littérature. Ce récepteur s'avère sous-optimal dans certaines situations décrites dans l'introduction. Pour pallier cette limitation, on présente un second récepteur MMSE dont la structure est pleinement widely linear *« fully widely linear »*.

**A. Récepteur MMSE de la littérature : Structure partiellement « widely linéaire » (Etat de l'art antérieur)**

Un récepteur MMSE pour la demodulation du symbole $a_{2n-1}$ met en oeuvre un récepteur conventionnel au sens du maximum de vraisemblance à partir de la sortie d'un filtre MMSE pour le symbole $a_{2n-1}$. Un filtre MMSE pour le symbole $a_{2n-1}$ minimise l'erreur quadratique moyenne (EQM), $E[|a_{2n-1} - y_1(n)|^2]$, entre sa sortie $y_1(n)$ et le symbole $\underline{a}_{2n-1}$.
Le filtre MMSE partiellement « widely linear » pour le symbole $a_{2n-1}$ possède la structure (19) où le filtre $\underline{\boldsymbol{w}}$ est défini par

$$\overline{w}_{1,mmse}(n) = R_{\overline{x}}(n)^{-1} r_{\overline{x}a_{2n-1}}(n) \qquad (26)$$

où, on déduit de (6) que $r_{\overline{x}a2n-1}(n) \triangleq E[\overline{x}(n)a_{2n-1}{}^*] = \pi_a g_1$. Il est alors possible de montrer que la sortie $y_1(n)$ de ce filtre s'écrit

$$y_1(n) = \alpha_1(n)\, a_{2n-1} + b_1(n) \tag{27}$$

où $a_{2n-1}$ est le symbole à démoduler, $\alpha_1(n)$ est une quantité réelle et $b_1(n)$ est le bruit global pour le symbole $a_{2n-1}$. En supposant un bruit global $b_1(n)$ Gaussien, un récepteur conventionnel au sens du maximum de vraisemblance à partir de $y_1(n)$ génère le symbole $a_{2n-1}$ qui minimise $|\alpha_1(n)a_{2n-1} - y_1(n)|^2$, i.e. $\alpha_1(n)\,|a_{2n-1}|^2 - 2\mathrm{Re}[a_{2n-1}{}^*\,y_1(n)]$. On déduit donc de (6) et de l'analyse précédente que le récepteur MMSE à structure partiellement widely linéaire génère les symboles $a_{2n-1}$ et $a_{2n}$ minimisant respectivement les critères

$$C_{pwl,1}(a_{2n-1}) = (\overline{w}_{1,mmse}(n)^{\mathrm{H}}\, r_{\overline{x}a2n-1}(n)\,/\,\pi_a)\,|\,a_{2n-1}|^2 - 2\,\mathrm{Re}[a_{2n-1}{}^*$$
$$\overline{w}_{1,mmse}(n)^{\mathrm{H}}\,\overline{x}(n)] \tag{28}$$

$$C_{pwl,2}(a_{2n}) = (\overline{w}_{2,mmse}(n)^{\mathrm{H}}\, r_{\overline{x}a2n}(n)\,/\,\pi_a)\,|\,a_{2n}|^2 - 2\,\mathrm{Re}[a_{2n}{}^*\,\overline{w}_{2,mmse}(n)^{\mathrm{H}}$$
$$\overline{x}(n)] \tag{29}$$

où $\overline{w}_{2,mmse} = R_{\overline{x}}(n)^{-1} r_{\overline{x}a2n}(n)$ et $r_{\overline{x}a2n}(n) \triangleq E[\overline{x}(n)a_{2n}{}^*] = \pi_a\,g_2$. Une alternative à ce récepteur consiste à remplacer, en sortie du filtre MMSE, le récepteur conventionnel au sens du maximum de vraisemblance par un récepteur au sens du maximum de vraisemblance approché. Dans ces conditions, le récepteur modifié MMSE à structure partiellement widely linéaire génère les symboles $a_{2n-1}$ et $a_{2n}$ minimisant respectivement les critères

$$C_{pwl,a,1}(a_{2n-1}) = |\,a_{2n-1}|^2 - 2\,\mathrm{Re}[a_{2n-1}{}^*\,\overline{w}_{1,mmse}(n)^{\mathrm{H}}\,\overline{x}(n)] \tag{30}$$

$$C_{pwl,a,2}(a_{2n}) = |\,a_{2n}|^2 - 2\,\mathrm{Re}[a_{2n}{}^*\,\overline{w}_{2,mmse}(n)^{\mathrm{H}}\,\overline{x}(n)] \tag{31}$$

Un tel récepteur est proposé dans la littérature et sa mise en oeuvre requiert, pour le premier, la connaissance de $\overline{w}_{1,mmse}(n)$, $\overline{w}_{2,mmse}(n) r_{\overline{x}a2n-1}(n)$, $r_{\overline{x}a2n}(n)$ et $\pi_a$ et, pour le second, la connaissance de $\overline{w}_{1,mmse}(n)$, $\overline{w}_{2,mmse}(n)$. Il exploite toute l'information contenue dans $R_{x1}(n)$, $R_{x2}(n)$ et $C_{x12}(n)$ mais n'exploite pas les informations contenues dans $C_{x1}(n)$, $C_{x2}(n)$ et $R_{x12}(n)$. Il devient donc sous-optimal lorsqu'au moins l'une de ces dernières quantités est non nulle. C'est en particilier le cas en présence d'interférences intra-réseau (c'est-à-dire générées par le réseau lui-même) lorsque les constellations utilisées par les utilisateurs sont non circulaires comme les constellations ASK (Amplitude Shift Keying), BPSK (Binary Phase Shift Keying) ou QAM (Quadrature Amplitude Modulation) rectangulaires. C'est aussi le cas, pour tous types de constellations, en présence d'interférences externes au réseau, soit non circulaires, soit à bande très étroite.

**B. Récepteur MMSE proposé : Structure pleinement widely linéaire**

B1. *Présentation*

Pour pallier les limitations du récepteur précédent, le procédé selon l'invention propose de mettre en oeuvre un récepteur MMSE pleinement « widely linear ».

Le filtre MMSE pleinement widely linear pour le symbole $a_{2n-1}$ possède la structure (20) où le filtre $\tilde{w}$ est défini par

$$\tilde{w}1,mmse(n) \;=\; R_{\tilde{x}}(n)^{-1}\, r_{\tilde{x}a2n-1}(n) \tag{32}$$

où, on déduit de (7) que $r_{\tilde{x}a2n-1}(n) \triangleq E[x(n)\, a_{2n-1}{}^*] = \pi_a[f_1 + \gamma_a{}^* f_3]$. En utilisant le fait que $r_{\tilde{x}a2n-1}{}^*(n) \triangleq E[\tilde{x}(n)\, a_{2n-1}] = \pi_a[\gamma_a \tilde{f}_1 + \tilde{f}_3]$, on en déduit que

$$\tilde{f}1 \;=\; [r_{\tilde{x}a2n-1}(n) - \gamma_a{}^*\, r_{\tilde{x}a2n-1}{}^*(n)] \,/\, \pi_a\,(1 - |\gamma_a|^2) \qquad \text{si } \gamma_a \neq 1 \tag{33}$$

On déduit donc de (7), (33) et des résultats du paragraphe précédent et de ce paragraphe que le récepteur MMSE à structure pleinement widely linéaire génère les symboles $a_{2n-1}$ et $a_{2n}$ minimisant respectivement les critères $C_{fwl,1}(a_{2n-1})$ et $C_{fwl,2}(a_{2n})$ definis par :

pour des constellations rectilignes ($|\gamma_a| = 1$)

$$C_{fwl,1}(a2n-1) = (\tilde{w}1,mmse(n)^{\mathrm{H}}\, r_{\tilde{x}a2n-1}(n)\,/\,\pi_a)\,|\,a2n-1|^2 - 2\,\mathrm{Re}[a2n-1{}^*$$

$$\tilde{w}1,mmse(n)^{\mathrm{H}}\, \tilde{x}(n)] \tag{34}$$

$$C_{fwl,2}(a2n) = (\tilde{w}2,mmse(n)^{\mathrm{H}}\, r_{\tilde{x}a2n}(n)\,/\,\pi_a)\,|\,a2n|^2 - 2\,\mathrm{Re}[a2n{}^*\, \tilde{w}2,mmse(n)^{\mathrm{H}}\, \tilde{x}(n)]$$

$$\tag{35}$$

Pour des constellations non rectilignes ($|\gamma_a| \neq 1$)

$$C_{fwl,1}(a2n-1) = (\tilde{w}1,mmse(n)^{\mathrm{H}}\, [r_{\tilde{x}a2n-1}(n) - \gamma_a{}^*\, r_{\tilde{x}a2n-1}{}^*(n)]\,/\,\pi_a\,(1 - |\gamma_a|^2))\,|$$

$$a2n-1|^2 - 2\,\mathrm{Re}[a2n-1{}^*\, \tilde{w}1,mmse(n)^{\mathrm{H}}\, \tilde{x}(n)] \tag{36}$$

$$C_{fwl,2}(a2n) = (\tilde{w}2,mmse(n)^{\mathrm{H}}\, [r_{\tilde{x}a2n}(n) - \gamma_a{}^*\, r_{\tilde{x}a2n}{}^*(n)]\,/\,\pi_a\,(1 - |\gamma_a|^2))\,|\,a2n|^2$$

$$- 2\,\mathrm{Re}[a2n{}^*\, \tilde{w}2,mmse(n)^{\mathrm{H}}\, \tilde{x}(n)] \tag{37}$$

où

$$\tilde{w}2,mmse(n) \;=\; R_{\tilde{x}}(n)^{-1} r_{\tilde{x}a2n}(n), \quad r_{\tilde{x}a2n}(n) \triangleq E[\tilde{x}(n)\, a2n{}^*] \text{ et } r_{\tilde{x}a2n}{}^*(n) \triangleq E[\tilde{x}(n)$$

$$a2n].$$

Une alternative à ce récepteur consiste à remplacer, en sortie du filtre MMSE, le récepteur conventionnel au sens du maximum de vraisemblance par un récepteur au sens du maximum de vraisemblance approché. Dans ces conditions, le récepteur modifié MMSE à structure pleinement widely linear génère les symboles $a_{2n-1}$ et $a_{2n}$ minimisant respectivement les critères définis par

Pour des constellations rectilignes ($|\gamma_a| = 1$)

$$C_{fwl,a,1}(a_{2n-1}) = |a_{2n-1}|^2 - 2\,\mathrm{Re}[a_{2n-1}^* \, \tilde{w}_{1,mmse}(n)^{\mathrm{H}} \, \tilde{x}(n)] \qquad (38)$$

$$C_{fwl,a,2}(a_{2n}) = |a_{2n}|^2 - 2\,\mathrm{Re}[a_{2n}^* \, \tilde{w}_{2,mmse}(n)^{\mathrm{H}} \, \tilde{x}(n)] \qquad (39)$$

Pour des constellations non rectilignes ($|\gamma_a| \neq 1$)

$$C_{fwl,a,1}(a_{2n-1}) = |a_{2n-1}|^2 - 2\,\mathrm{Re}[a_{2n-1}^* \, \tilde{w}_{1,mmse}(n)^{\mathrm{H}} \, \tilde{x}(n)] \qquad (40)$$

$$C_{fwl,a,2}(a_{2n}) = |a_{2n}|^2 - 2\,\mathrm{Re}[a_{2n}^* \, \tilde{w}_{2,mmse}(n)^{\mathrm{H}} \, \tilde{x}(n)] \qquad (41)$$

La mise en oeuvre de ce récepteur requiert, pour la première alternative, la connaissance de $\tilde{w}_{1,mmse}(n)$, $\tilde{w}_{2,mmse}(n)$, $r_{\tilde{x}a2n-1}(n)$, $r_{\tilde{x}a2n-1}^*(n)$, $r_{\tilde{x}a2n}(n)$, $r_{\tilde{x}a2n}^*(n)$, $\gamma_a$ et $\pi_a$ et pour la seconde alternative, la connaissance de $\tilde{w}_{1,mmse}(n)$ et $\tilde{w}_{2,mmse}(n)$ Ce récepteur exploite toute l'information contenue dans $R_{x1}(n)$, $R_{x2}(n)$, $R_{x12}(n)$, $C_{x1}(n)$, $C_{x2}(n)$ et $C_{x12}(n)$. On peut montrer que pour des constellations rectilignes, le récepteur (34), (35) correspond au récepteur optimal (23) quelque soit les canaux $h_1$ et $h_2$ lorsque le bruit total vérifie la condition C1 définie par

$$C1 : R_1(n) = R_2(n);\ C_1(n) = C_2(n);\ R_{12}(n)^{\mathrm{H}} \tilde{=} R_{12}(n);\ C_{12}(n)^{\mathrm{T}} \tilde{=} C_{12}(n) \quad (42)$$

ce qui est en particulier le cas en présence d'interférences intra-réseau.

La figure 2 est un schéma fonctionnel d'un dispositif ou système permettant la mise en oeuvre des étapes du procédé selon l'invention.

Le système comporte N antennes de réception $10_1$, ..$10_i$, ,$10_N$ reliée à un premier module de traitement 11 des signaux reçus fournissant le signal étendu *x*(2n - 1), *x*(2n), *x*(2n - 1)*, *x*(2n)*. Les signaux étendus sont ensuite transmis à un filtre 12 linéaire en moyenne quadratique afin d'être mis en forme avant d'être transmis à un module 13 de type ML permettant d'estimer les symboles.

B2. *Nombre maximal d'interférences traitées*

On suppose dans ce paragraphe que le bruit total $b(n)$ est composé de $P_{int}$ interférences synchrones intra-réseau, correspondant à d'autres utilisateurs Alamouti du réseau avec la même constellation, $P_{ext}$ interférences externes, provenant d'autres réseaux ou du brouillage et un bruit de fond. Une interférence externe $i$ est rectiligne si son enveloppe complexe $m_i(t)$ est telle que $m_i(t)^* = m_i(t)\,e^{j\phi i}$ et non rectiligne autrement. Elle est dite cohérente si $m_i((2n-1)T) \approx m_i(2nT)\,e^{j\psi i}$ et non cohérente autrement. Une interférence cohérente correspond à un signal à bande très étroite en comparaison avec la bande des utilisateurs du réseau. Sous ces hypothèses, on suppose que les $P_{ext}$ interférences externes sont composées de $P_{rc}$ interférences rectilignes et cohérentes, $P_{rnc}$ interférences rectilignes et non cohérentes, $P_{nrc}$ interférences non rectilignes et cohérentes et $P_{nrnc}$ interférences non rectilignes et non cohérentes telles que $P_{ext} = P_{rc} + P_{rnc} + P_{nrc} + P_{nrnc}$. Sous ces hypothèses, on déduit de (7) et des résultats du traitement d'antenne que le nombre maximal d'interférences $P = P_{int} + P_{ext}$ pouvant être rejetées par le récepteur MMSE à structure pleinement "widely linear" vérifie les conditions suivantes :

Pour des constellations rectilignes :

$$2P_{int} + P_{rc} + 2P_{rnc} + 2P_{nrc} + 4P_{nrnc} \leq 4N - 2 \qquad (43)$$

Pour des constellations non rectilignes :

$$4P_{int} + P_{rc} + 2P_{rnc} + 2P_{nrc} + 4P_{nrnc} \leq 4N - 4 \qquad (44)$$

On déduit de ce résultat qu'en absence d'interférences externes, $P_{int} \leq N - 1$ pour des constellations non rectilignes alors que $P_{int} \leq 2N - 1$ pour des constellations rectilignes. Dans ce dernier cas, le récepteur proposé permet de rejeter 1 interférence interne à partir d'une seule antenne d'où l'extension du concept SAIC aux systèmes MISO utilisant le schéma d'Alamouti, ce que ne permet pas le récepteur MMSE partiellement "widely linear".

B3. *Mise en oeuvre*

En pratique, les quantités $R_{\tilde{x}}(n)$, $r_{\tilde{x}a2n-1}(n)$, $r_{\tilde{x}a2n-1}{}^*(n)$, $r_{\tilde{x}a2n}(n)$ et $r_{\tilde{x}a2n}{}^*(n)$ ne sont pas connues a priori et doivent être estimées à partir de séquences d'apprentissage introduite dans le schéma de codage ST. En supposant que les quantités précédentes sont invariantes sur la durée de la séquence constituée de $K$ blocs Alamouti connus de 2 symboles, les quantités précédentes peuvent être estimées respectivement par les expressions

$$\hat{R}_{\tilde{x}}(n) \triangleq \frac{1}{K} \sum_{k=1}^{K} \tilde{x}((n + k - 1)T)\, \tilde{x}((n + k - 1)T)^{\dagger} \qquad (45)$$

$$\hat{r}_{\tilde{x}a2n-1}(n) \triangleq \frac{1}{K} \sum_{k=1}^{K} \tilde{x}((n + k - 1)T)\, a2(n+k-1)-1^{*} \qquad (46)$$

$$\hat{r}_{\tilde{x}a2n-1}{}^*(n) \triangleq \frac{1}{K} \sum_{k=1}^{K} \tilde{x}((n + k - 1)T)\, a2(n+k-1)-1 \qquad (47)$$

$$\hat{r}_{\tilde{x}a2n}(n) \triangleq \frac{1}{K} \sum_{k=1}^{K} \tilde{x}((n + k - 1)T)\, a2(n+k-1)^{*} \qquad (48)$$

$$\hat{r}_{\tilde{x}a2n}{}^*(n) \triangleq \frac{1}{K} \sum_{k=1}^{K} \tilde{x}((n + k - 1)T)\, a2(n+k-1) \qquad (49)$$

B4. *Performances et avantages du procédé et du système selon l'invention*

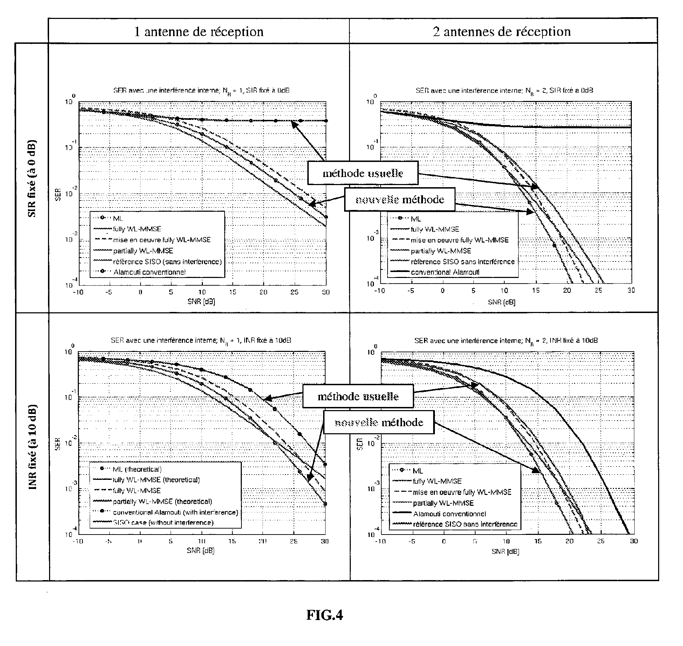

Les performances du récepteur MMSE à structure pleinement "widely linear", conjointement aux récepteurs ML, MMSE partiellement "widely linear" et Alamouti conventionnel sont illustrées à la figure 4 pour une constellation ASK à 4 états en présence d'une interférence interne. Ces figures montrent les variations du taux d'erreur symbole en fonction du SNR d'entrée (dB) pour N = 1 et N = 2 capteurs, lorsque les SNR et INR sont tels que respectivement SNR/INR = 0 dB et INR = 10 dB.
Le canal est pris constant sur un créneau temporel ou en anglo-saxon « burst », et les taux d'erreur sont obtenus en moyennant sur un grand nombre de bursts. Les différentes valeurs numériques prises dans les simulations sont récapitulées à la figure 3.

On note l'optimalité du récepteur proposé pour une interférence interne et ses meilleures performances que le récepteur MMSE partiellement "widely linear". Le récepteur Alamouti conventionnel est inopérant quant à lui lorsque le rapport SNR / INR est faible.

REFERENCES

[1] S.M. ALAMOUTI, "A simple transmit diversity technique for wireless communications", IEEE Journal on Selected areas in Communications, Vol 16, No8, pp. 1451-1458, Oct. 1998.

[22] A.F. NAGUIB, N. SESHADRI, A.R. CALDERBANK, "Applications of space-time block codes and interférence suppression for high capacity and high data rate wireless systems", Proc. 32th Annual Asilomar Conference on Signals, Systems and Computer, pp. 1803-1810, Pacific Grove, California, Nov. 1998.

[23] A. NAGUIB, N. SESHADRI, A.R. CALDERBANK, "Space-time coding and signal processing for high data rate wireless communications", IEEE Signal Processing Magazine, Vol 17, N°3, pp. 76-92, May 2000.

**Revendications**

1. Procédé pour séparer plusieurs utilisateurs dans un système de communication comprenant 2 antennes à l'émission et une à N antennes en réception, lesdits signaux émis par lesdits utilisateurs contenant des symboles $a_n$, x() correspondant au vecteur des enveloppes des signaux en sortie des 1 à N antennes de réception après une opération de filtrage de mise en forme, ledit système étant robuste aux interférences aussi bien intra-réseau qu'externes, **caractérisé en ce qu'**il utilise un filtre linéaire, en moyenne quadratique, étendu sur un vecteur d'observation étendus $\tilde{x} = [x(2n-1)^T\ x(2n)^T\ x(2n-1)^H\ x(2n)^H]^T$ où x(2n-1) et x(2n) correspondent aux observations (N×1) (N≥1) aux instants symboles 2n-1 et 2n, un vecteur d'observation étant associé à une sous-porteuse donnée, sur deux symboles OFDM.

2. Procédé selon la revendication 1 **caractérisé en ce que** pour un nombre $N \geq 1$ de capteurs arbitraire, pour des utilisateurs d'un réseau de communication exploitant le schéma d'Alamouti en émission et en présence d'interférences externes, les symboles $a_{2n-1}$ et $a_{2n}$ utilisés sont les symboles minimisant respectivement les critères $C_{fwl,1}(a_{2n-1})$ et $C_{fwl,2}(a_{2n})$ définis par :

Pour des constellations rectilignes ($|\gamma_a| = 1$)

$$C_{fwl,1}(a_{2n-1}) = (\tilde{w}_{1,mmse}(n)^H\ r_{\tilde{x}a_{2n-1}}(n)\ /\ \pi_a)\ |a_{2n-1}|^2 - 2\ \mathrm{Re}[a_{2n-1}^*\ \tilde{w}_{1,mmse}(n)^H\ \tilde{x}(n)] \qquad (34)$$

$$C_{fwl,2}(a_{2n}) = (\tilde{w}_{2,mmse}(n)^H\ r_{\tilde{x}a_{2n}}(n)\ /\ \pi_a)\ |a_{2n}|^2 - 2\ \mathrm{Re}[a_{2n}^*\ \tilde{w}_{2,mmse}(n)^H\ \tilde{x}(n)] \qquad (35)$$

Pour des constellations non rectilignes ($|\gamma_a| \neq 1$)

$$C_{fwl,1}(a_{2n-1}) = (\tilde{w}_{1,mmse}(n)^H\ [r_{\tilde{x}a_{2n-1}}(n) - \gamma_a^*\ r_{\tilde{x}a_{2n-1}}^*(n)]\ /\ \pi_a\ (1 - |\gamma_a|^2))\ |a_{2n-1}|^2 - 2\ \mathrm{Re}[a_{2n-1}^*\ \tilde{w}_{1,mmse}(n)^H\ \tilde{x}(n)] \qquad (36)$$

$$C_{fwl,2}(a2n) = (\tilde{w}_{2,mmse}(n)^H [r_{\tilde{x}a2n}(n) - \gamma_a{}^* r_{\tilde{x}a2n}{}^*(n)] / \pi_a (1 - |\gamma_a|^2)) | a2n|^2$$

$$- 2 \, \text{Re}[a2n^* \, \tilde{w}_{2,mmse}(n)^H \, \tilde{x}(n)] \tag{37}$$

où $w_{1,mmse}(n) = R_x(n)^{-1}r_x a_{2n-1}(n)$, $w_{2,mmse}(n) = R_x(n)^{-1}r_x a_{2n}(n)$, $R_x(n) \triangleq E[\tilde{x}(n) \tilde{x}(n)^H]$, $r_{\tilde{x}}a_{2n-1}(n) \triangleq E[x(n) a_{2n-1}{}^*]$, $r_x a_{2n-1}{}^*(n) \triangleq E[\tilde{x}(n) a_{2n-1}]$, $r_{\tilde{x}} a_{2n}(n) \triangleq E[x(n) a_{2n}{}^*]$, $r_x a_{2n}{}^*(n) \triangleq E[x(n) a_{2n}]$

3. Procédé selon la revendication 2 **caractérisé en ce que** pour un nombre $N \geq 1$ de capteurs arbitraire, pour des utilisateurs d'un réseau de communication exploitant le schéma d'Alamouti en émission et en présence d'interférences externes le cas échéant, la minimisation des critères (34) et (35) pour des constellations rectilignes et (36) et (37) pour des constellations non rectilignes, où $\tilde{w}_{1,mmse}(n) = R_{\tilde{x}}(n)^{-1}r_{\tilde{x}} a_{2n-1}(n)$ et $\tilde{w}_{2,mmse}(n) = R_{\tilde{x}}(n)^{-1}r_{\tilde{x}}a_{2n}(n)$ et où les statistiques exactes $R_{\tilde{x}}(n)$, $r_{\tilde{x}} a_{2n-1}(n)$, $r_{\tilde{x}}a_{2n-1}{}^*(n)$, $r_{\tilde{x}}a_{2n}(n)$ et $r_{\tilde{x}}a_{2n}{}^*(n)$ sont remplacées par leurs estimées (45) à (49) sur une durée correspondant à $K$ blocs connus de 2 symboles, avec

$$\hat{R}_{\tilde{x}}(n) \triangleq \frac{1}{K} \sum_{k=1}^{K} \tilde{x}((n + k - 1)T) \tilde{x}((n + k - 1)T)^\dagger \tag{45}$$

$$\hat{r}_{\tilde{x}a2n\text{-}1}(n) \triangleq \frac{1}{K} \sum_{k=1}^{K} \tilde{x}((n + k - 1)T) \, a_{2(n+k-1)-1}{}^* \tag{46}$$

$$\hat{r}_{\tilde{x}a2n\text{-}1}{}^*(n) \triangleq \frac{1}{K} \sum_{k=1}^{K} \tilde{x}((n + k - 1)T) \, a_{2(n+k-1)-1} \tag{47}$$

$$\hat{r}_{\tilde{x}a2n}(n) \triangleq \frac{1}{K} \sum_{k=1}^{K} \tilde{x}((n + k - 1)T) \, a_{2(n+k-1)}{}^* \tag{48}$$

$$\hat{r}_{\tilde{x}a2n}{}^*(n) \triangleq \frac{1}{K} \sum_{k=1}^{K} \tilde{x}((n + k - 1)T) \, a_{2(n+k-1)} \tag{49}$$

4. Procédé selon la revendication 1 **caractérisé en ce que** pour un nombre $N \geq 1$ de capteurs arbitraire, pour des utilisateurs d'un réseau de communication exploitant le schéma d'Alamouti en émission et en présence d'interférences externes le cas échéant, les symboles $a_{2n-1}$ et $a_{2n}$ utilisés sont les symboles minimisant respectivement les critères $C_{fwl,a,1}(a_{2n-1})$ et $C_{fwl,a,2}(a_{2n})$ définis par :

Pour des constellations rectilignes ($|\gamma_a| = 1$)

$$C_{fwl,a,1}(a2n\text{-}1) = | a2n\text{-}1|^2 - 2 \, \text{Re}[a2n\text{-}1^* \, \tilde{w}_{1,mmse}(n)^H \, \tilde{x}(n)] \tag{38}$$

$$C_{fwl,a,2}(a_{2n}) = |a_{2n}|^2 - 2\,\mathrm{Re}[a_{2n}^*\,\tilde{w}_{2,mmse}(n)^H\,\tilde{x}(n)] \tag{39}$$

Pour des constellations non rectilignes ($|\gamma_a| \neq 1$)

$$C_{fwl,a,1}(a_{2n-1}) = |a_{2n-1}|^2 - 2\,\mathrm{Re}[a_{2n-1}^*\,\tilde{w}_{1,mmse}(n)^H\,\tilde{x}(n)] \tag{40}$$

$$C_{fwl,a,2}(a_{2n}) = |a_{2n}|^2 - 2\,\mathrm{Re}[a_{2n}^*\,\tilde{w}_{2,mmse}(n)^H\,\tilde{x}(n)] \tag{41}$$

où $w_{1,mmse}(n) = R_{\tilde{x}}(n)^{-1} r_{\tilde{x}} a_{2n-1}(n)$, $\tilde{w}_{2,mmse}(n) = R_{\tilde{x}}(n)^{-1} r_{\tilde{x}} a_{2n}(n)$.

**5.** Procédé selon la revendication 4 **caractérisé en ce que** pour un nombre $N \geq 1$ de capteurs arbitraire, pour des utilisateurs d'un réseau de communication exploitant le schéma d'Alamouti en émission et en présence d'interférences externes le cas échéant, la minimisation des critères (38) et (39) pour des constellations rectilignes et (40) et (41) pour des constellations non rectilignes, où $\tilde{w}_{1,mmse}(n) = R_{\tilde{x}}(n)^{-1} r_{\tilde{x}}\, a_{2n-1}(n)$ et $\tilde{w}_{2,mmse}(n) = R_{\tilde{x}}(n)^{-1} r_{\tilde{x}} a_{2n}(n)$ et où les statistiques exactes $R_{\tilde{x}}(n)$, $r_{\tilde{x}}\, a_{2n-1}(n)$, $r_{\tilde{x}} a_{2n}(n)$ sont remplacées par leurs estimées (45), (46), (48) sur une durée correspondant à $K$ blocs connus de 2 symboles, avec

$$\hat{R}_{\tilde{x}}(n) \triangleq \frac{1}{K} \sum_{k=1}^{K} \tilde{x}((n+k-1)T)\,\tilde{x}((n+k-1)T)^\dagger \tag{45}$$

$$\hat{r}_{\tilde{x}a_{2n-1}}(n) \triangleq \frac{1}{K} \sum_{k=1}^{K} \tilde{x}((n+k-1)T)\, a_{2(n+k-1)-1}^* \tag{46}$$

$$\hat{r}_{\tilde{x}a_{2n}}(n) \triangleq \frac{1}{K} \sum_{k=1}^{K} \tilde{x}((n+k-1)T)\, a_{2(n+k-1)}^* \tag{48}$$

**6.** Procédé selon la revendication 1 **caractérisé en ce que** pour un nombre $N \geq 1$ de capteurs arbitraire, pour des utilisateurs d'un réseau de communication exploitant le schéma d'Alamouti en émission et en présence d'interférences externes le cas échéant, les symboles $a_{2n-1}$ et $a_{2n}$ utilisés sont les symboles minimisant respectivement le critère défini par :

$$C_{nc-wls}[a(n)] \triangleq [\tilde{x}(n) - \tilde{F}\,\tilde{a}(n)]^H R_{\tilde{b}}(n)^{-1}[\tilde{x}(n) - \tilde{F}\,\tilde{a}(n)] \tag{23}$$

où $\tilde{x}(n) \triangleq [x(n)^T, x(n)^H]^T$, $F \triangleq [\tilde{f}_1, \tilde{f}_2, \tilde{f}_3, \tilde{f}_4]$, $\tilde{f}_1 \triangleq [f_1^T, f_3^H]^T$, $\tilde{f}_2 \triangleq [f_2^T, f4^H]^T$, $\tilde{f}_3 \triangleq [f3^T, f_1^H]^T$, $\tilde{f}_4 \triangleq [f_4^T, f_2^H]^T$, $f_1 \triangleq [\mu_1\, h_1^T, 0^T]^T$, $f_2 \triangleq [\mu_2\, h_2^T, 0^T]^T$, $f_3 \triangleq [0^T, \mu_2\, h_2^T]^T$, $f_4 \triangleq [0^T, -\mu_1\, h_1^T]^T$, $a(n) \triangleq [a(n)^T, a(n)^H]^T$, $a(n) \triangleq [a_{2n-1}, a_{2n}]^T$, $R_b(n) \triangleq E[\tilde{b}(n)\, \tilde{b}(n)^H]$, $\tilde{b}(n) \triangleq [b(n)^T, b(n)^H]^T$.

**7.** Procédé selon la revendication 6 **caractérisé en ce que** pour un nombre $N \geq 1$ de capteurs arbitraire, pour des utilisateurs d'un réseau de communication exploitant le schéma d'Alamouti en émission et en présence d'interférences externes le cas échéant, les symboles $a_{2n-1}$ et $a_{2n}$ utilisés sont les symboles minimisant respectivement le critère défini par :

$$C_{nc-wls}[a(n)] \overset{\Delta}{=} [\tilde{x}(n) - \tilde{F}\,\tilde{a}(n)]^H R_{\tilde{b}}(n)^{-1} [\tilde{x}(n) - \tilde{F}\,\tilde{a}(n)] \qquad (23)$$

où $\mu_1\,\boldsymbol{h}_1$, $[\mu_2\,\boldsymbol{h}_2$ et $R_{\tilde{b}}(n)$ sont remplacées par leurs estimées.

8. Système pour séparer plusieurs utilisateurs dans un système de communication comprenant 2 antennes à l'émission et une à N antennes en réception, ledit système étant robuste aux interférences aussi bien intra-réseau qu'externes, lesdits signaux émis par lesdits utilisateurs contenant des symboles $a_n$, x() correspondant au vecteur des enveloppes des signaux en sortie des 1 à N antennes de réception après une opération de filtrage de mise en forme **caractérisé en ce qu'**il comporte un processeur adapté à mettre en oeuvre les étapes selon l'une des revendications 1 à 7.

9. Système selon la revendication 8 **caractérisé en ce que** les antennes de réception constituant le récepteur sont un récepteur MMSE.

10. Utilisation du procédé selon l'une des revendications 1 à 7 et du système selon l'une des revendications 8 et 9 pour traiter conjointement, à partir d'un réseau de $N \geq 1$ capteurs, $P_{int}$ interférences internes et $P_{ext}$ interférences externes au réseau composées de $P_{rc}$ interférences rectilignes et cohérentes, $P_{rnc}$ interférences rectilignes et non cohérentes, $P_{nrc}$ interférences non rectilignes et cohérentes et $P_{nrnc}$ interférences nonr ectilignes et non cohérentes telles que $P_{ext} = P_{rc} + P_{rnc} + P_{nrc} + P_{nrnc}$ et vérifiant les conditions suivantes :

Pour des constellations rectilignes :

$$2P_{int} + P_{rc} + 2P_{rnc} + 2P_{nrc} + 4P_{nrnc} \leq 4N - 2$$

Pour des constellations non rectilignes :

$$4P_{int} + P_{rc} + 2P_{rnc} + 2P_{nrc} + 4P_{nrnc} \leq 4N - 4$$

**Patentansprüche**

1. Verfahren zum Trennen mehrerer Nutzer in einem Kommunikationssystem, das 2 Sendeantennen und 1 bis N Empfangsantennen umfasst, wobei die von den Nutzern emittierten Signale Symbole $a_n$, x() entsprechend dem Vektor von Hüllkurven von Signalen am Ausgang der 1 bis N Empfangsantennen nach einem Formungsfiltervorgang enthalten, wobei das System gegenüber Störungen innerhalb wie auch außerhalb des Netzes robust ist, **dadurch gekennzeichnet, dass** es ein lineares, im Durchschnitt quadratisches Filter benutzt, das sich auf einem Beobachtungsvektor mit den Abmessungen $\tilde{x} = [x(2n-1)^{\top}x(2n)^{\top}x(2n-1)^H x(2n)^H]^T$ erstreckt, wobei x(2n-1) und x(2n) den Beobachtungen (Nx1) (N≥1) an den Symbolzeitpunkten 2n-1 und 2n entsprechen, wobei ein Beobachtungsvektor mit einem gegebenen Subträger auf zwei OFDM-Symbolen assoziiert ist.

2. Verfahren nach Anspruch 1, **dadurch gekennzeichnet, dass** für eine arbiträre Anzahl $N \geq 1$ von Sensoren für die Nutzer eines Kommunikationsnetzes, das das Alamouti-Schema beim Senden und in Anwesenheit von externen Störungen nutzt, die verwendeten Symbole $a_{2n-1}$ und $a_{2n}$ Symbole sind, die jeweils die Kriterien $C_{fwl,1}(a_{2n-1})$ und $C_{fwl,2}(a_{2n})$ minimieren, die definiert sind durch:

für geradlinige Konstellationen ($|\gamma a| = 1$):

$$C_{fwl,1}(a_{2n-1}) = (\tilde{w}_{1,mmse}(n)^H \, r_{\tilde{x}a_{2n-1}}(n) \, / \, \pi_a) \mid a_{2n-1} \mid^2 - 2\,Re[a_{2n-1}^* \, \tilde{w}_{1,mmse}(n)^H \, \tilde{x}(n)] \qquad (34)$$

$$C_{fwl,2}(a_{2n}) = (\tilde{w}_{2,mmse}(n)^H \, r_{\tilde{x}a_{2n}}(n) \, / \, \pi_a) \mid a_{2n} \mid^2 - 2\,Re[a_{2n}^* \, \tilde{w}_{2,mmse}(n)^H \, \tilde{x}(n)] \qquad (35)$$

für nicht geradlinige Konstellationen ($|\gamma_a| \neq 1$):

$$C_{fwl,1}(a_{2n-1}) = (\tilde{w}_{1,mmse}(n)^H \, [r_{\tilde{x}a_{2n-1}}(n) - \gamma_a^* \, r_{\tilde{x}a_{2n-1}}^*(n)] \, / \, \pi_a \,(1 - |\gamma_a|^2)) \mid a_{2n-1} \mid^2 - 2\,Re[a_{2n-1}^* \, \tilde{w}_{1,mmse}(n)^H \, \tilde{x}(n)] \qquad (36)$$

$$C_{fwl,2}(a_{2n}) = (\tilde{w}_{2,mmse}(n)^H \, [r_{\tilde{x}a_{2n}}(n) - \gamma_a^* \, r_{\tilde{x}a_{2n}}^*(n)] \, / \, \pi_a \,(1 - |\gamma_a|^2)) \mid a_{2n} \mid^2 - 2\,Re[a_{2n}^* \, \tilde{w}_{2,mmse}(n)^H \, \tilde{x}(n)] \qquad (37)$$

wobei $w_{1,mmse}(n) = R_x(n)^{-1} r_x a_{2n-1}(n)$, $w_{2,mmse}(n) = R_x(n)^{-1} r_x a_{2n}(n)$, $R_x(n) \triangleq E[\tilde{x}(n)\tilde{x}(n)^H]$, $r_x a_{2n-1}(n) \triangleq E[x(n)a_{2n-1}^*]$, $r_x a_{2n-1}^*(n) \triangleq E[\tilde{x}(n)a_{2n-1}]$, $r_{\tilde{x}} a_{2n}(n) \triangleq E[x(n)a_{2n}^*]$, $r_x a_{2n}^*(n) \triangleq E[\tilde{x}(n)a_{2n}]$

3. Verfahren nach Anspruch 2, **dadurch gekennzeichnet, dass** für eine arbiträre Anzahl N ≥ 1 von Sensoren, für die Nutzer eines Kommunikationsnetzes, das das Alamouti-Schema beim Senden und ggf. in Anwesenheit von externen Störungen nutzt, die Minimierung von Kriterien (34) und (35) für geradlinige Konstellationen und (36) und (37) für nicht geradlinige Konstellationen, wobei $\tilde{w}_{1,mmse}(n) = R_{\tilde{x}}(n)^{-1} r_{\tilde{x}} a_{2n-1}(n)$ und $\tilde{w}_{2,mmse}(n) = R_{\tilde{x}}(n)^{-1} r_{\tilde{x}} a_{2n}(n)$ und wobei die exakten Statistiken $R_{\tilde{x}}(n)$, $r_{\tilde{x}} a_{2n-1}(n)$, $r_{\tilde{x}} a_{2n-1}^*(n)$, $r_{\tilde{x}} a_{2n}(n)$ and $r_{\tilde{x}} a_{2n}^*(n)$ durch ihre Schätzungen (45) bis (49) für eine Dauer ersetzt werden, die K bekannten Blöcken von 2 Symbolen entsprechen, mit

$$\hat{R}_{\tilde{x}}(n) \triangleq \frac{1}{K} \sum_{k=1}^{K} \tilde{x}((n+k-1)T)\,\tilde{x}((n+k-1)T)^\dagger \qquad (45)$$

$$\hat{r}_{\tilde{x}a_{2n-1}}(n) \triangleq \frac{1}{K} \sum_{k=1}^{K} \tilde{x}((n+k-1)T)\, a_{2(n+k-1)-1}^* \qquad (46)$$

$$\hat{r}_{\tilde{x}a_{2n-1}}^*(n) \triangleq \frac{1}{K} \sum_{k=1}^{K} \tilde{x}((n+k-1)T)\, a_{2(n+k-1)-1} \qquad (47)$$

$$\hat{r}_{\tilde{x}a2n}(n) \triangleq \frac{1}{K}\sum_{k=1}^{K} \tilde{x}((n+k-1)T)\ a2(\text{n}+\text{k-1})^{*} \tag{48}$$

$$\hat{r}_{\tilde{x}a2n}^{*}(n) \triangleq \frac{1}{K}\sum_{k=1}^{K} \tilde{x}((n+k-1)T)\ a2(\text{n}+\text{k-1}) \tag{49}$$

4. Verfahren nach Anspruch 1, **dadurch gekennzeichnet, dass** für eine arbiträre Anzahl $N \geq 1$ von Sensoren für die Nutzer eines Kommunikationsnetzes, das das Alamouti-Schema beim Senden und ggf. in Anwesenheit von externen Störungen nutzt, die verwendeten Symbole $a_{2n-1}$ und $a_{2n}$ Symbole sind, die jeweils die Kriterien $C_{fwl,a,1}(a_{2n-1})$ und $C_{fwl,a,2}(a_{2n})$ minimieren, die definiert sind durch:

für geradlinige Konstellationen ($|\gamma a| = 1$):

$$C_{fwl,a,1}(a2n-1) = |a2n-1|^{2} - 2\ \text{Re}[a2n-1^{*}\ \tilde{w}1,mmse(n)^{H}\ \tilde{x}(n)] \tag{38}$$

$$C_{fwl,a,2}(a2n) = |a2n|^{2} - 2\ \text{Re}[a2n^{*}\ \tilde{w}2,mmse(n)^{H}\ \tilde{x}(n)] \tag{39}$$

für nicht geradlinige Konstellationen ($|\gamma a| \neq 1$):

$$C_{fwl,a,1}(a2n-1) = |a2n-1|^{2} - 2\ \text{Re}[a2n-1^{*}\ \tilde{w}1,mmse(n)^{H}\ \tilde{x}(n)] \tag{40}$$

$$C_{fwl,a,2}(a2n) = |a2n|^{2} - 2\ \text{Re}[a2n^{*}\ \tilde{w}2,mmse(n)^{H}\ \tilde{x}(n)] \tag{41}$$

wobei $\tilde{w}_{1,mmse}(n) = R_{\tilde{x}}(n)^{-1}r_{\tilde{x}}a_{2n-1}(n)$, $\tilde{w}_{2,mmse}(n) = R_{\tilde{x}}(n)^{-1}r_{\tilde{x}}a_{2n}(n)$.

5. Verfahren nach Anspruch 4, **dadurch gekennzeichnet, dass** für eine arbiträre Anzahl $N \geq 1$ von Sensoren für die Nutzer eines Kommunikationsnetzes, das das Alamouti-Schema beim Senden und ggf. in Anwesenheit von externen Störungen nutzt, die Minimierung der Kriterien (38) und (39) für geradlinige Konstellationen und (40) und (41) für nicht geradlinige Konstellationen nutzt, wobei $\tilde{w}_{1,mmse}(n) = R_{\tilde{x}}(n)^{-1}r_{\tilde{x}}\ a_{2n-1}(n)$ und $\tilde{w}_{2,mmse}(n) = R_{\tilde{x}}(n)^{-1}r_{\tilde{x}}a_{2n}(n)$, und wobei die exakten Statistiken $R_{\tilde{x}}(n)$, $r_{\tilde{x}}\ a_{2n-1}(n)$, $r_{\tilde{x}}a_{2n}(n)$ durch ihre Schätzungen (45), (46), 48) für eine Dauer ersetzt werden, die K bekannten Blöcken von 2 Symbolen entspricht, mit

$$\hat{R}_{\tilde{x}}(n) \triangleq \frac{1}{K}\sum_{k=1}^{K} \tilde{x}((n+k-1)T)\tilde{x}((n+k-1)T)^{\dagger} \tag{45}$$

$$\hat{r}_{\tilde{x}a2n-1}(n) \triangleq \frac{1}{K}\sum_{k=1}^{K} \tilde{x}((n+k-1)T)\ a2(\text{n}+\text{k-1})\text{-1}^{*} \tag{46}$$

$$\hat{r}_{\tilde{x}a2n}(n) \quad \triangleq \quad \frac{1}{K} \sum_{k=1}^{K} \tilde{x}((n+k-1)T)\ a2(n+k-1)^{*} \tag{48}$$

6. Verfahren nach Anspruch 1, **dadurch gekennzeichnet, dass** für eine arbiträre Anzahl N ≥ 1 von Sensoren, für die Benutzer eines Kommunikationsnetzes, das das Alamouti-Schema beim Senden und ggf. in Anwesenheit von externen Störungen nutzt, die benutzten Symbole $a_{2n-1}$ und $a_{2n}$ Symbole sind, die jeweils das Kriterium minimieren, das definiert wird durch:

$$C_{nc\text{-}wls}[a(n)] \quad \triangleq \quad [\tilde{x}(n) - \tilde{F}\ \tilde{a}(n)]^{H} R_{\tilde{b}}(n)^{-1}[\tilde{x}(n) - \tilde{F}\ \tilde{a}(n)] \tag{23}$$

wobei $\tilde{x}(n) \triangleq [x(n)^{\mathsf{T}}, x(n)^{\mathsf{H}}]^{\mathsf{T}}$, $\tilde{F} \triangleq [\tilde{f}_1, \tilde{f}_2, \tilde{f}_3, \tilde{f}_4]$, $\tilde{f}_1 \triangleq [f_1{}^{\mathsf{T}}, f_3{}^{\mathsf{H}}]^{\mathsf{T}}, \tilde{f}_2 \triangleq [f_2{}^{\mathsf{T}}, f_4{}^{\mathsf{H}}]^{\mathsf{T}}, \tilde{f}_3 \triangleq [f_3{}^{\mathsf{T}}, f_1{}^{\mathsf{H}}]^{\mathsf{T}}, \tilde{f}_4 \triangleq [f_4{}^{\mathsf{T}}, f_2{}^{\mathsf{H}}]^{\mathsf{T}}, f_1 \triangleq [\mu_1\ h_1{}^{\mathsf{T}}, 0^{\mathsf{T}}]^{\mathsf{T}}, f_2 \triangleq [\mu_2 h_2{}^{\mathsf{T}}, 0^{\mathsf{T}}]^{\mathsf{T}}, f_3 \triangleq [0^{\mathsf{T}}, \mu_2\ h_2{}^{\mathsf{T}}]^{\mathsf{T}}, f_4 \triangleq [0^{\mathsf{T}}, -\ \mu_1\ h_1{}^{\mathsf{T}}]^{\mathsf{T}}, a(n) \triangleq [a(n)^{\mathsf{T}}, a(n)^{\mathsf{H}}]^{\mathsf{T}}, a(n) \triangleq [a_{2n-1}, a_{2n}]^{\mathsf{T}}, R_b(n) \triangleq \mathsf{E}[\tilde{b}(n)\tilde{b}(n)^{\mathsf{H}}], \tilde{b}(n) \triangleq [b(n)^{\mathsf{T}}, b(n)^{\mathsf{H}}]^{\mathsf{T}}$.

7. Verfahren nach Anspruch 6, **dadurch gekennzeichnet, dass** für eine arbiträre Anzahl N ≥ 1 von Sensoren, für die Benutzer eines Kommunikationsnetzes, das das Alamouti-Schema beim Senden und ggf. in Anwesenheit von externen Störungen nutzt, die benutzten Symbole $a_{2n-1}$ und $a_{2n}$ Symbole sind, die jeweils das Kriterium minimieren, das definiert wird durch:

$$C_{nc\text{-}wls}[a(n)] \quad \triangleq \quad [\tilde{x}(n) - \tilde{F}\ \tilde{a}(n)]^{H} R_{\tilde{b}}(n)^{-1}[\tilde{x}(n) - \tilde{F}\ \tilde{a}(n)] \tag{23}$$

wobei $\mu_1 h_1$, $[\mu_2\ h_2$ und $R_{\tilde{b}}(n)$ durch ihre Schätzungen ersetzt werden.

8. System zum Trennen von mehreren Benutzern in einem Kommunikationssystem, das 2 Sendeantennen und 1 bis N Empfangsantennen umfasst, wobei das System gegenüber Störungen innerhalb wie auch außerhalb des Netzes robust ist, wobei die von den Nutzern ausgesendeten Signale Symbole $a_n$, x() entsprechend dem Vektor von Hüllkurven der Signale am Ausgang der 1 bis N Empfangsantennen nach einem Formgebungsfiltervorgang enthalten, **dadurch gekennzeichnet, dass** es einen Prozessor zum Ausführen der Schritte nach einem der Ansprüche 1 bis 7 umfasst.

9. System nach Anspruch 8, **dadurch gekennzeichnet, dass** die den Empfänger bildenden Empfangsantennen ein MMSE-Empfänger sind.

10. Anwendung des Verfahrens nach einem der Ansprüche 1 bis 7 und des Systems nach einem der Ansprüche 8 und 9 zur gemeinsamen Verarbeitung, auf der Basis eines Netzes von N ≥ 1 Sensoren, von $P_{int}$ internen Störungen und $P_{ext}$ externen Störungen bezüglich des Netzes, zusammengesetzt aus $P_{rc}$ geradlinigen und kohärenten Störungen, $P_{rnc}$ geradlinigen und nicht kohärenten Störungen, $P_{nrc}$ nicht geradlinigen und kohärenten Störungen und $P_{nrnc}$ nicht geradlinigen und nicht kohärenten Störungen wie $P_{ext} = P_{rc} + P_{rnc} + P_{rnc} + P_{nrnc}$, und das folgende Bedingungen erfüllt:

für geradlinige Konstellationen:

$$2P_{int} + P_{rc} + 2P_{rnc} + 2P_{nrc} + 4P_{nrnc} \leq 4N - 2$$

für nicht geradlinige Konstellationen:

$$4P_{int} + P_{rc} + 2P_{rnc} + 2P_{nrc} + 4P_{nrnc} \leq 4N - 4$$

## Claims

1. Method for separating a plurality of users in a communication system including two transmitter antennas and N receiver antennas, said signals transmitted by said users containing symbols $a_n$, x() corresponding to the vector of the envelopes of the output signals of the 1 to N receiver antennas after a shaping filtering operation, said system being robust in the face of intra network interferences or extra interferences, said method using a linear mean square filter extended over an observation vector $x$
= $[\mathbf{x}(2n\text{-}1)^T \, \mathbf{x}(2n)^T \, \mathbf{x}(2n\text{-}1)^H \, \mathbf{x}(2n)^H]^T$ where $\mathbf{x}(2n\text{-}1)$ and $\mathbf{x}(2n)$ correspond to the $(N \times 1)$ $(N \geq 1)$ observations at the symbol times 2n-1 and 2n, an observation vector being associated with a given sub-carrier of two symbols OFDM.

2. Method according to claim 1 wherein for an arbitrary number $N \geq 1$ of sensor, for users of a communication network using the Alamouti scheme on transmission and in the presence of external interferences, the symbols $a_{2n-1}$ and $a_{2n}$ used are the symbols minimizing the respective criteria $C_{fwl,1}(a_{2n-1})$ and $C_{fwl,2}(a_{2n})$ defined by:

For rectilinear constellations ($|\gamma_a| = 1$)

$$\mathrm{C}_{fwl,1}(a_{2n-1}) = (\tilde{w}_{1,mmse}(n)^H \, r_{\tilde{x}a_{2n-1}}(n) \, / \, \pi_a) \, | \, a_{2n-1}|^2 \, - \, 2 \, \mathrm{Re}[a_{2n-1}^* \, \tilde{w}_{1,mmse}(n)^H \, \tilde{x}(n)] \qquad (34)$$

$$\mathrm{C}_{fwl,2}(a_{2n}) = (\tilde{w}_{2,mmse}(n)^H \, r_{\tilde{x}a_{2n}}(n) \, / \, \pi_a) \, | \, a_{2n}|^2 \, - \, 2 \, \mathrm{Re}[a_{2n}^* \, \tilde{w}_{2,mmse}(n)^H \, \tilde{x}(n)] \qquad (35)$$

For non-rectilinear constellations ($|\gamma_a| \neq 1$)

$$\mathrm{C}_{fwl,1}(a_{2n-1}) = (\tilde{w}_{1,mmse}(n)^H \, [r_{\tilde{x}a_{2n-1}}(n) - \gamma_a^* \, r_{\tilde{x}a_{2n-1}}^*(n)] \, / \, \pi_a \, (1 - |\gamma_a|^2)) \, | \, a_{2n-1}|^2 \, - \, 2 \, \mathrm{Re}[a_{2n-1}^* \, \tilde{w}_{1,mmse}(n)^H \, \tilde{x}(n)] \qquad (36)$$

$$\mathrm{C}_{fwl,2}(a_{2n}) = (\tilde{w}_{2,mmse}(n)^H \, [r_{\tilde{x}a_{2n}}(n) - \gamma_a^* \, r_{\tilde{x}a_{2n}}^*(n)] \, / \, \pi_a \, (1 - |\gamma_a|^2)) \, | \, a_{2n}|^2 \, - \, 2 \, \mathrm{Re}[a_{2n}^* \, \tilde{w}_{2,mmse}(n)^H \, \tilde{x}(n)] \qquad (37)$$

where $w_{1,mmse}(n) = R_x(n)^{-1} r_x a_{2n-1}(n)$, $w_{2,mmse}(n) = R_x(n)^{-1} r_x a_{2n}(n)$, $R_x(n) \, \underline{\Delta} \, E[\tilde{x}(n) \, \tilde{x}(n)^H]$, $r_{\tilde{x}} a_{2n-1}(n) \, \underline{\Delta} E[x(n) \, a_{2n-1}^*]$, $r_x a_{2n-1}^*(n) \, \underline{\Delta} \, E[\tilde{x}(n) \, a_{2n-1}]$, $r_{\tilde{x}} \, a_{2n}(n) \, \underline{\Delta} \, E[x(n) \, a_{2n}^*]$, $r_x a_{2n}^*(n) \, \underline{\Delta} \, E[\tilde{x}(n) \, a_{2n}]$

3. Method according to claim 2, wherein for an arbitrary number $N \geq 1$ of sensors, for users of a communication network using the Alamouti scheme on transmission and in the presence of external interferences where appropriate, the minimizing of the criteria (34) and (35) for rectilinear constellations and (36) and (37) for non-rectilinear constellations, where $\tilde{w}_{1,mmse}(n) = R_{\tilde{x}}(n)^{-1} r_{\tilde{x}} a_{2n-1}(n)$ and $\tilde{w}_{2,mmse}(n) = R_{\tilde{x}}(n)^{-1} r_{\tilde{x}} a_{2n}(n)$ and where the exact statistics $R_{\tilde{x}}(n)$, $r_{\tilde{x}} a_{2n-1}(n)$, $r_{\tilde{x}} a_{2n-1}^*(n)$, $r_{\tilde{x}} a_{2n}(n)$ and $r_{\tilde{x}} a_{2n}^*(n)$ are replaced by the estimates (45) to (49) thereof over a duration corresponding to $K$ known blocks of two symbols, where

$$\hat{R}_{\tilde{x}}(n) \triangleq \frac{1}{K} \sum_{k=1}^{K} \tilde{x}((n+k-1)T)\, \tilde{x}((n+k-1)T)^{\dagger} \qquad (45)$$

$$\hat{r}_{\tilde{x}a2n\text{-}1}(n) \triangleq \frac{1}{K} \sum_{k=1}^{K} \tilde{x}((n+k-1)T)\, a2(n+k\text{-}1)\text{-}1^{*} \qquad (46)$$

$$\hat{r}_{\tilde{x}a2n\text{-}1}{}^{*}(n) \triangleq \frac{1}{K} \sum_{k=1}^{K} \tilde{x}((n+k-1)T)\, a2(n+k\text{-}1)\text{-}1 \qquad (47)$$

$$\hat{r}_{\tilde{x}a2n}(n) \triangleq \frac{1}{K} \sum_{k=1}^{K} \tilde{x}((n+k-1)T)\, a2(n+k\text{-}1)^{*} \qquad (48)$$

$$\hat{r}_{\tilde{x}a2n}{}^{*}(n) \triangleq \frac{1}{K} \sum_{k=1}^{K} \tilde{x}((n+k-1)T)\, a2(n+k\text{-}1) \qquad (49)$$

**4.** Method according to claim 1 wherein for an arbitrary number $N \geq 1$ of sensors, for users of a communication network using the Alamouti scheme on transmission and in the presence of external interferences where appropriate, the symbols $a_{2n-1}$ et $a_{2n}$ used are the symbols minimizing the respective criteria $C_{fwl,a,1}(a_{2n-1})$ et $C_{fwl,a,2}(a_{2n})$ defined by:

For rectilinear constellations ($|\gamma_a| = 1$)

$$C_{fwl,a,1}(a2n-1) = |a2n-1|^{2} - 2\,\mathrm{Re}[a2n-1^{*}\,\tilde{w}_{1,mmse}(n)^{\mathrm{H}}\,\tilde{x}(n)] \qquad (38)$$

$$C_{fwl,a,2}(a2n) = |a2n|^{2} - 2\,\mathrm{Re}[a2n^{*}\,\tilde{w}_{2,mmse}(n)^{\mathrm{H}}\,\tilde{x}(n)] \qquad (39)$$

For non-rectilinear constellations ($|\gamma_a| \neq 1$)

$$C_{fwl,a,1}(a2n-1) = |a2n-1|^{2} - 2\,\mathrm{Re}[a2n-1^{*}\,\tilde{w}_{1,mmse}(n)^{\mathrm{H}}\,\tilde{x}(n)] \qquad (40)$$

$$C_{fwl,a,2}(a2n) = |a2n|^{2} - 2\,\mathrm{Re}[a2n^{*}\,\tilde{w}_{2,mmse}(n)^{\mathrm{H}}\,\tilde{x}(n)] \qquad (41)$$

where $\tilde{w}_{1,mmse}(n) = R_{\tilde{x}}(n)^{-1} r_{\tilde{x}}a_{2n-1}(n)$, $\tilde{w}_{2,mmse}(n) = R_{\tilde{x}}(n)^{-1} r_{\tilde{x}}a_{2n}(n)$.

**5.** Method according to claim 4 wherein for an arbitrary number $N \geq 1$ of sensors, for users of a communication network using the Alamouti scheme on transmission and in the presence of external interferences where appropriate, the minimization of the criteria (38) and (39) for rectilinear constellations and (40) and (41) for non-rectilinear constellations, where $\tilde{w}_{1,mmse}(n) = R_{\tilde{x}}(n)^{-1} r_{\tilde{x}} a_{2n-1}(n)$ and $\tilde{w}_{2,mmse}(n) = R_{\tilde{x}}(n)^{-1} r_{\tilde{x}} a_{2n}(n)$ and where the exact statistics $R_{\tilde{x}}(n)$, $r_{\tilde{x}} a_{2n-1}(n)$, $r_{\tilde{x}} a_{2n}(n)$ are replaced by the estimates (45), (46), (48) thereof over a duration corresponding to $K$ known blocks of two symbols, where

$$\hat{R}_{\tilde{x}}(n) \triangleq \frac{1}{K} \sum_{k=1}^{K} \tilde{x}((n+k-1)T)\, \tilde{x}((n+k-1)T)^{\dagger} \qquad (45)$$

$$\hat{r}_{\tilde{x}a2n-1}(n) \triangleq \frac{1}{K} \sum_{k=1}^{K} \tilde{x}((n+k-1)T)\, a2(n+k-1)-1^{*} \qquad (46)$$

$$\hat{r}_{\tilde{x}a2n}(n) \triangleq \frac{1}{K} \sum_{k=1}^{K} \tilde{x}((n+k-1)T)\, a2(n+k-1)^{*} \qquad (48)$$

**6.** Method according to claim 1 wherein for an arbitrary number $N \geq 1$ of sensors, for users of a communication network using the Alamouti scheme on transmission and in the presence of external interferences where appropriate, the symbols $a_{2n-1}$ and $a_{2n}$ used are the symbols minimizing respectively the criterion defined by:

$$C_{nc\text{-}wls}[a(n)] \triangleq [\tilde{x}(n) - \tilde{F}\,\tilde{a}(n)]^{H} R_{\tilde{b}}(n)^{-1} [\tilde{x}(n) - \tilde{F}\,\tilde{a}(n)] \qquad (23)$$

Where $\tilde{x}(n) \triangleq [x(n)^{T}, x(n)^{H}]^{T}$, $F \triangleq [\tilde{f}_1, \tilde{f}_2, \tilde{f}_3, \tilde{f}_4]$, $\tilde{f}_1 \triangleq [f_1^{T}, f_3^{H}]^{T}$, $\tilde{f}_2 \triangleq [f_2^{T}, f_4^{H}]^{T}$, $\tilde{f}_3 \triangleq [f_3^{T}, f_1^{H}]^{T}$, $\tilde{f}_4 \triangleq [f_4^{T}, f_2^{H}]^{T}$, $f_1 \triangleq [\mu_1\, h_1^{T}, 0^{T}]^{T}$, $f_2 \triangleq [\mu_2\, h_2^{T}, 0^{T}]^{T}$, $f_3 \triangleq [0^{T}, \mu_2\, h_2^{T}]^{T}$, $f_4 \triangleq [0^{T}, -\mu_1\, h_1^{T}]^{T}$, $a(n) \triangleq [a(n)^{T}, a(n)^{H}]^{T}$, $a(n) \triangleq [a_{2n-1}, a_{2n}]^{T}$, $R_b(n) \triangleq E[\tilde{b}(n)\, \tilde{b}(n)^{H}]$, $\tilde{b}(n) \triangleq [b(n)^{T}, b(n)^{H}]^{T}$.

**7.** Method according to claim 6 wherein for an arbitrary number $N \geq 1$ of sensors, for users of a communication network using the Alamouti scheme on transmission and in the presence of external interferences where appropriate, the symbols $a_{2n-1}$ and $a_{2n}$ used are the symbols minimizing respectively the criterion defined by:

$$C_{nc\text{-}wls}[a(n)] \triangleq [\tilde{x}(n) - \tilde{F}\,\tilde{a}(n)]^{H} R_{\tilde{b}}(n)^{-1} [\tilde{x}(n) - \tilde{F}\,\tilde{a}(n)] \qquad (23)$$

where $\mu_1\, h_1$, $[\mu_2\, h_2$ and $R_{\tilde{b}}(n)$ are replaced by the estimates thereof.

**8.** System for separating a plurality of users in a communication system including two transmitter antennas and N receiver antennas, said system being robust in the face of intra network interferences or extra interferences, said signals transmitted by said users containing symbols $a_n$, x() corresponding to the vector of the envelopes of the output signals of the 1 to N receiver antennas after a shaping filtering operation, **characterized in that** it includes a processor adapted to execute these steps according to one of claims 1 to 7.

**9.** System according to claim 8 wherein the receiver antennas constituting the receiver are an MMSE receiver.

**10.** Use of the method according to one of claims 1 to 7 and the system according to one of claims 8 and 9 to process conjointly, coming from an array of $N \geq 1$ sensors, $P_{int}$ interferences internal and $P_{ext}$ interferences external to the network composed of $P_{rc}$ rectilinear and coherent interferences, $P_{rnc}$ rectilinear and non-coherent interferences, $P_{nrc}$ non-rectilinear and coherent interferences, and $P_{nrnc}$ non-rectilinear and non-coherent interferences such that

$P_{ext} = P_{rc} + P_{rnc} + P_{nrc} + P_{nrnc}$ and verifying the following conditions:

For rectilinear constellations:

$$2P_{int} + P_{rc} + 2P_{rnc} + 2P_{nrc} + 4P_{nrnc} \leq 4N - 2$$

For non-rectilinear constellations:

$$4P_{int} + P_{rc} + 2P_{rnc} + 2P_{nrc} + 4P_{nrnc} \leq 4N - 4$$

$a_{2n-1}$

$a_{2n}$

temps-symboles impairs

$-a_{2n}^{*}$

$a_{2n-1}^{*}$

temps-symboles pairs

**FIG.1**

N antennes de
réception 10i

$x(2n-1), x(2n)$

**11**

$x(2n-1)$

$x(2n)$

$x(2n-1)^{*}$

$x(2n)^{*}$

**MMSE**
**12**

$z(n)=[\ z_1(n)\ z_2(n)\ ]$

**ML**
(ou ML
approché)
**13**

$\hat{a}=[\ \hat{a}_1\ \hat{a}_2\ ]$

**FIG.2**

| canal | de Rayleigh, constant sur un burst |
|---|---|
| longueur d'un burst | 112 symboles utiles |
| d'une séquence d'apprentissage | 26 symboles |
| SNR | variant de –10 à +30 Db |
| constellation | 4-ASK : [-3 -1 +1 +3] |
| nombre de bursts | 100 000 |
|  |  |

**FIG.3**

FIG.4

## RÉFÉRENCES CITÉES DANS LA DESCRIPTION

### Littérature non-brevet citée dans la description

- **S.M. ALAMOUTI.** A simple transmit diversity technique for wireless communications. *IEEE Journal on Selected areas in Communications,* Octobre 1998, vol. 16 (8), 1451-1458
- **A.F. NAGUIB ; N. SESHADRI ; A.R. CALDERBANK.** Applications of space-time block codes and interférence suppression for high capacity and high data rate wireless systems. *Proc. 32th Annual Asilomar Conference on Signals, Systems and Computer,* Novembre 1998, 1803-1810
- **A. NAGUIB ; N. SESHADRI ; A.R. CALDERBANK.** Space-time coding and signal processing for high data rate wireless communications. *IEEE Signal Processing Magazine,* Mai 2000, vol. 17, 76-92